# EUROPÄISCHE PATENTSCHRIFT

(11) **EP 2 722 549 B1**
(45) Veröffentlichungstag und Bekanntmachung des Hinweises auf die Patenterteilung: **28.08.2019**
(21) Anmeldenummer: 13004783.0
(22) Anmeldetag: 04.10.2013
(51) Int. Cl.: F16D 41/36, F16D 41/24, B60B 27/04, B60B 27/02

(54) **Freilaufnabe für ein Fahrrad**
Freewheeling hub for a bicycle
Moyeu à roue libre pour un vélo

(30) Priorität: 18.10.2012 DE 102012020472
(43) Veröffentlichungstag der Anmeldung: 23.04.2014
(73) Patentinhaber: SRAM Deutschland GmbH, 97424 Schweinfurt (DE)
(72) Erfinder: Braedt, Henrik, 97456 Dittelbrunn/OT Hambach (DE)

(56) Entgegenhaltungen:
- EP-A1- 2 422 996
- DE-A1- 19 847 673
- TW-U- M 427 293
- US-A- 6 123 179

## Beschreibung

Die vorliegende Erfindung betrifft eine Freilaufnabe für ein Fahrrad, umfassend eine Nabenachse, ein Nabengehäuse, das über eine Lageranordnung drehbar auf der Nabenachse gelagert ist, eine Ritzelanordnung, die drehbar auf der Nabenachse gelagert ist, eine Freilaufkupplung, die zwischen dem Nabengehäuse und der Ritzelanordnung angeordnet ist und wahlweise eine Relativdrehung zwischen dem Nabengehäuse und der Ritzelanordnung zulässt oder das Nabengehäuse und die Ritzelanordnung zur Drehmomentübertragung koppelt, wobei die Freilaufkupplung, im folgenden auch Freilaufanordnung genannt, einen ersten Kupplungsring aufweist, der drehmomentübertragend mit dem Nabengehäuse gekoppelt oder koppelbar ist, und einen zweiten Kupplungsring aufweist, der drehmomentübertragend mit der Ritzelanonrdnung gekoppelt oder koppelbar ist, wobei die beiden Kupplungsringe einander zugewandte Verzahnungen aufweisen, mit denen sie wahlweise in gegenseitigen drehmomentübertragenden Eingriff oder außer Eingriff bringbar sind, wobei wenigstens einer der Kupplungsringe relativ zu Nabenachse axial verlagerbar ist.

Derartige Freilaufnaben sind aus dem Stand der Technik bekannt. So zeigt beispielsweise das Dokument DE 198 47 673 A1 eine Freilaufnabe, bei der die beiden Kupplungsringe jeweils über eine ihnen zugeordnete Feder aufeinander zu gespannt sind. Nachteilig bei dieser Lösung ist, dass sämtliche Komponenten axial nebeneinander angeordnet sind, was zu einer verhältnismäßig großen axialen Länge führt, die für die Freilaufanordnung erforderlich ist. Auch die Tatsache, dass beide Kupplungsringe jeweils mit einer Außenverzahnung zur Drehmomentübertragung mit der Ritzelanordnung bzw. mit dem Nabengehäuse ausgebildet sind, sorgt für ein erhebliches Bauraumerfordernis, weil diese Zähne hinreichend stark und lang dimensioniert sein müssen, um eine sichere Funktionsweise zu gewährleisten. Ferner haben Freilaufnaben dieser Bauart, bei denen wenigstens einer der Kupplungsringe durch eine Feder in Richtung auf den anderen zu gespannt ist, den Nachteil, dass diese in der Freilaufsituation eine verhältnismäßig starke Geräuschentwicklung zeigen, was insbesondere bei Freilaufnaben, die im Leistungssport oder von ambitionierten und anspruchsvollen Hobbysportlern eingesetzt werden, häufig als störend empfunden wird.

Eine ähnliche Lösung ist auch jeweils in den Dokumenten DE 197 31451 A1 und DE 298 03 667 U1 gezeigt.

Das Dokument US 5,676,227 zeigt eine vergleichbare Lösung, bei der lediglich einer der Kupplungsringe über eine Feder auf den anderen Kupplungsring hin vorgespannt. Diese Lösung ist aber hinsichtlich des erforderlichen Baums vergleichbar mit den vorangehend geschilderten Lösungen aus dem Stand der Technik. Auch zeigt diese Lösung eine erhebliche Geräuschentwicklung in der Freilaufsituation.

Das Dokument EP 2 422 996 A1 beschreibt eine Freilaufnabe, bei der ein axial beweglicher Kupplungsring, der zur Drehmomentübertragung mit dem Nabengehäuse ausgebildet ist, über Magnetkräfte auf eine an einem Ritzelträger angebrachte Stirnverzahnung hin vorgespannt ist.

Schließlich wird zum technischen Hintergrund noch auf die Dokumente US 5,964,332 und US 5,493,799 verwiesen.

Es ist eine Aufgabe der vorliegenden Erfindung, eine Freilaufnabe mit zuverlässiger Funktionsweise, geringer Geräuschentwicklung in der Freilaufsituation und kompakter Bauform bereitzustellen.

Diese Aufgabe wird durch eine Freilaufnabe der eingangs bezeichneten Art gelöst, bei der vorgesehen ist, dass die beiden Kupplungsringe in einem achsenthaltenden Schnitt betrachtet ein abgestuftes Wandstärkenprofil mit einem Abschnitt größerer Wandstärke und einem Abschnitt reduzierter Wandstärke aufweisen, wobei die Verzahnung in einem mittleren Radialbereich der Kupplungsringe jeweils im Abschnitt größerer Wandstärke ausgebildet ist, wobei der Abschnitt reduzierter Wandstärke bei dem einen der beiden Kupplungsringe radial innerhalb der Verzahnung an diese anschließend ausgebildet ist und wobei der Abschnitt reduzierter Wandstärke bei dem anderen der beiden Kupplungsringe radial außerhalb der Verzahnung an diese anschließend ausgebildet ist. Mit anderen Worten sind die beiden Kupplungsringe zueinander komplementär abgestuft ausgebildet, wodurch für jeden Kupplungsring an sich aber auch in Wechselwirkung miteinander Bauraum in axialer Richtung eingespart werden kann. Die Verzahnung ist jeweils in dem Bereich größerer Wandstärke vorgesehen, der sich auch noch über die Verzahnung hinaus erstrecken kann, um den jeweiligen Kupplungsring zu verstärken. Der in seiner Wandstärke reduzierte Bereich ermöglicht die Einsparung axialen Bauraums.

Dabei kann erfindungsgemäß vorgesehen sein, dass bei drehmomentübertragendem Eingriff zwischen erstem und zweitem Kupplungsring die Abschnitte größerer Wandstärke in einem achsenthaltenden Schnitt betrachtet einander überlappen. Der Abschnitt größerer Wandstärke des einen Kupplungsrings liegt dabei an dem Abschnitt reduzierter Wandstärke des anderen Kupplungsrings an und umgekehrt. Ist beispielsweise der erste Kupplungsring in seinem radial äußeren Bereich sowie in seinem radial mittleren Bereich mit stärkerer Wandstärke und in seinem radial inneren Bereich mit reduzierter Wandstärke ausgebildet, so ist der zweite Kupplungsring in seinem radial äußeren Bereich mit reduzierter Wandstärke und in seinem radial mittleren und radial inneren Bereich mit größerer Wandstärke ausgebildet. Werden beide Kupplungsringe miteinander in Eingriff gebracht, so dass die beiden im radial mittleren Bereich jeweils angeordneten Verzahnungen weitestmöglich ineinandergreifen, so liegt der im Beispielsfall mit größerer Materialstärke ausgebildete radial äußere Bereich des ersten Kupplungsrings an dem mit kleinerer Materialstärke ausgebildeten radial äußeren Bereich des zweiten Kupplungsrings an. Insgesamt lässt sich so weiter in axialer Richtung Bauraum sparen. Die Kupplungsringe sind hinreichend stabil und steif durch die jeweiligen Abschnitte größerer Wandstärke. Dennoch benötigen sie im Eingriffsfall weniger Bauraum als beim Stand der Technik, weil sie sich in ihrer komplementär zueinander abgestuften Form aneinanderlegen in überlappend ineinander greifen können, wobei die Verzahnungen nicht zusätzlich in axialer Richtung vorstehen müssen.

Es ist darauf hinzuweisen, dass gerade bei modernen Freilaufnaben, insbesondere im Hochleistungsbereich, die Einsparung von Bauraum eine bedeutende Rolle spielt. Insbesondere dann, wenn die Ritzelanordnung eine Kassette mit einer Vielzahl von - beispielsweise 11 oder mehr - Ritzeln aufweist, ist es erforderlich, hierfür hinreichend Bauraum bereitzustellen, der an anderer Stelle, beispielsweise durch die erfindungsgemäße Freilaufanordnung, eingespart werden kann.

Ferner kann bei einer Freilaufnabe der eingangs oder vorstehend beschriebenen Art vorgesehen sein, dass wenigstens einer der Kupplungsringe über eine Mitnahmeformation, vorzugsweise über eine Verzahnung oder über Axialstifte, zur Drehmomentübertragung mit dem Nabengehäuse oder der Ritzelanordnung gekoppelt ist. Die Mitnahmeformation kann dabei jeweils im Abschnitt größerer Wandstärke ausgebildet sein.

Die Verwendung von Axialstiften zur Drehmomentübertragung zwischen wenigstens einem der Kupplungsringe und der diesem zugeordneten Komponente, das heißt dem Nabengehäuse oder der Ritzelanordnung, ermöglicht es, den jeweiligen Kupplungsring ohne radial äußere Mitnahmeformation, wie etwa eine Außenverzahnung, auszubilden, die entsprechend stabil ausgelegt sein muss. Dadurch lässt sich der Freilaufmechanismus gemäß der vorliegenden Erfindung insgesamt kompakter und raumsparender gestalten. Erfindungsgemäß kann vorgesehen sein, dass die Drehmomentübertragung über mehrere Axialstifte erfolgt, so dass die mechanischen Belastungen auf den Kupplungsring gleichmäßig verteilt werden können.

Bei Verwendung einer Verzahnung kann diese als Außenverzahnung oder als Innenverzahnung ausgebildet sein.

Die Kupplungsringe können in ihrem Durchmesser derart dimensioniert sein, dass sie radial außerhalb einer Lageranordnung zur drehbaren Lagerung des Nabengehäuses oder der Ritzelanordnung auf der Nabenachse liegen. Mit anderen Worten lässt sich der Freilaufmechanismus der erfindungsgemäßen Freilaufnabe radial außerhalb der Lageranordnungen der Nabe positionieren, so dass diese in axialer Richtung überlappend und damit in axialer Richtung bauraumsparend angeordnet werden können. Außerdem lässt sich dadurch die Lageranordnung ohne Rücksichtnahme auf die Freilaufkupplung optimieren.

Die Axialstifte können auf die Anzahl der Zähne der Verzahnung abgestimmt sein. Idealerweise ist die Anzahl der Zähne und die Anzahl der Axialstifte identisch. Alternativ ist es auch möglich, dass nur jedem n-ten, beispielsweise jedem zweiten, dritten oder nur jedem vierten, Zahn ein Axialstift zugeordnet ist. Die Axialstifte können massiv oder zur Gewichtseinsparung auch als Hohlstifte ausgebildet sein. Wie vorstehend angedeutet können alternativ zu Axialstiften auch eine Innenverzahnung oder eine Außenverzahnung am jeweiligen Kupplungsring vorgesehen werden. Dabei können, wie vorstehend für die Axialstifte festgestellt, auch die Zähne dieser Verzahnungen zahlenmäßig auf die Zähne der Verzahnung der beiden Kupplungsringe abgestimmt sein.

Gemäß einer Ausführungsvariante der Erfindung ist vorgesehen, dass wenigstens einer der Kupplungsringe mit einer Mehrzahl von axialen Durchbrüchen versehen ist, in die zur Drehmomentübertragung die Axialstifte eingreifen. Die Axialstifte können dabei den jeweiligen Kupplungsring im Abschnitt größerer Wandstärke durchsetzen, d.h. dort, wo der Kupplungsring stabiler ist. Bei dieser Ausführungsvariante sind die Axialstifte also an der jeweils anderen Komponente, das heißt an dem Nabengehäuse oder an der Ritzelanordnung angebracht und durchsetzen die Durchbrüche vorzugsweise im Abschnitt größerer Wandstärke des jeweiligen Kupplungsrings. Der Kupplungsring ist dabei axial verschiebbar auf den Axialstiften geführt, um verschiedene Eingriffszustände zu erreichen. So lässt sich der Kupplungsring beispielsweise axial in eine Stellung verlagern, in der er zur Drehmomentübertragung in Eingriff mit dem anderen Kupplungsring steht, oder er lässt sich aus dieser Stellung heraus in eine Freilaufstellung verlagern.

Eine Weiterbildung der Erfindung sieht vor, dass die die Axialstifte aufnehmenden Durchbrüche im Wesentlichen auf einer Kreislinie angeordnet sind. Mit anderen Worten ist in dem jeweiligen Kupplungsring ein Lochkreis vorgesehen, dessen Löcher auf die Dimensionierung der Axialstifte abgestimmt sind. Die Löcher können kreisförmig oder als Langlöcher ausgebildet sein, um auch bestimmte radiale Steuerbewegungen des jeweiligen Kupplungsrings, beispielsweise in einem Winkelbereich von 2° bis 5° in Umfangsrichtung, neben einer axialen Verschiebbarkeit, zu ermöglichen.

Im Falle des Einsatzes von Verzahnungen statt Axialstiften können diese Verzahnungen mit einem Spiel in Umfangsrichtung versehen sein, beispielsweise in einem Winkelbereich von 2° bis 5° in Umfangsrichtung.

Gemäß einer weiteren Ausführungsform der Erfindung kann vorgesehen sein, dass die Axialstifte an der Ritzelanordnung fixiert sind, wobei der zweite Kupplungsring die die Axialstifte aufnehmenden Durchbrüche aufweist. Bei dieser Ausführungsvariante ist beispielsweise der erste mit dem Nabengehäuse zur Drehmomentübertragung gekoppelte Kupplungsring fixiert, wohingegen der zweite Kupplungsring auf den fest an der Ritzelanordnung angebrachten Axialstiften axial geführt ist. Alternativ hierzu ist es möglich, dass die Axialstifte an dem Nabengehäuse fixiert sind, wobei der erste Kupplungsring die die Axialstifte aufnehmenden Durchbrüche aufweist.

Neben einer Lösung, bei der die Axialstifte am Nabengehäuse oder an der Ritzelanordnung fixiert sind, ist es bei alternativen Ausführungsformen der Erfindung auch möglich, dass wenigstens einer der Kupplungsringe mit einer Mehrzahl von Axialstiften versehen ist, mit denen er axial in Ausnehmungen der Ritzelanordnung oder dem Nabengehäuse geführt ist. Die Axialstifte können am Kupplungsring unmittelbar angeformt oder an diesem angebracht sein.

Es müssen gemäß der vorliegenden Erfindung nicht beide Kupplungsringe über Axialstifte mit der jeweils anderen Komponente, Nabengehäuse oder Ritzelanordnung, drehmomentübertragend gekoppelt sein. Alternativ kann auch vorgesehen sein, dass einer der Kupplungsringe mit einer Außenverzahnung zur Drehmomentübertragung mit dem Nabengehäuse oder der Ritzelanordnung ausgebildet ist. Grundsätzlich sind gemäß der Erfindung folgende Varianten möglich:
(i) Beide Kupplungsringe sind axial beweglich, wobei der eine auf den anderen zu (feder-)vorgespannt ist, oder
(ii) nur einer der Kupplungsringe ist axial bewegbar, wobei der andere vollkommen oder im Wesentlichen axial fixiert ist.

"Im Wesentlichen axial fixiert" bedeutet in diesem Zusammenhang, dass er beispielsweise geringfügig unter Deformation eines Dämpfungselements axial verlagerbar ist, wobei das Dämpfungselement im Wesentlichen der Vermeidung von Geräuschentwicklung dient.

Es ergeben sich erfindungsgemäß folgende Varianten:
- Erster Kupplungsring ist angefedert, zweiter Kupplungsring ist im Wesentlichen axial fixiert, aber gedämpft.
- Erster Kupplungsring ist angefedert, zweiter Kupplungsring ist axial in Richtung des ersten Kupplungsrings verschiebbar (durch Hinterschnitt oder Steuerring, wie im Folgenden noch beschrieben). Dabei können beide Kupplungsringe gedämpft sein.
- Erster Kupplungsring ist in Richtung des zweiten Kupplungsrings angefedert, wobei ein Anschlag die axiale Bewegung des ersten Kupplungsrings in Richtung des zweiten Kupplungsrings so begrenzt, dass die aus der Zahngeometrie mögliche maximale Überlappung nicht erreicht wird, jedoch eine minimale Überlappung der Zähne gewährleistet wird; der zweite Kupplungsring ist in Richtung des ersten Kupplungsrings axial verschiebbar (und zieht sich im Lastfall an diese heran). Dabei können wiederum beide Kupplungsringe gedämpft sein.

Vorstehend wurde dargelegt, dass wenigstens einer der Kupplungsringe zum Umschalten zwischen einer Drehmomentübertragungssituation und einer Freilaufsituation eine Axialbewegung ausführt. In diesem Zusammenhang kann vorgesehen sein, dass wenigstens einer der Kupplungsringe mit einer axialen Vorspannkraft in Richtung auf den jeweils anderen Kupplungsring hin gespannt ist. Dabei ist es möglich, dass der erste Kupplungsring mit einer axialen Vorspannkraft in Richtung auf den zweiten Kupplungsring hin gespannt ist, oder dass der zweite Kupplungsring mit einer axialen Vorspannkraft in Richtung auf den ersten Kupplungsring hin gespannt ist, oder dass beide Kupplungsringe jeweils in Richtung aufeinander zu gespannt sind.

Zum Erzielen der Vorspannkraft kann vorgesehen sein, dass diese jeweils durch eine Feder oder magnetisch erreicht wird. Verwendet man eine Feder, so kann sich diese beispielsweise am Nabengehäuse oder an der Ritzelanordnung mit ihrem einen Ende abstützen und mit ihrem anderen Ende den jeweils axial beweglichen Kupplungsring axial vorspannen. Bei einem Einsatz von Magneten zum Erzielen der Vorspannkraft kann vorgesehen sein, dass an dem ersten oder/und dem zweiten Kupplungsring eine Mehrzahl von Magneten angeordnet ist, wobei jedem Magnet ein Komplementärmagnet an der Ritzelanordnung oder dem Nabengehäuse zugeordnet ist, wobei jedes Paar aus Magnet und Komplementärmagnet die axiale Vorspannkraft auf den jeweiligen Kupplungsring ausübt. Die Verwendung von Magneten hat den Vorteil, dass die Magnetkräfte mit zunehmendem Abstand eine degressive Kennlinie haben und dass darüber hinaus kein mechanischer Verschleiß auftreten kann, wie etwa beim Einsatz eines reibenden dauerhaft komprimierten Federelements. Ferner ist diese Anordnung platzsparend, weil die Magnete an den jeweiligen Komponenten nahezu beliebig angebracht werden können, d.h. gerade an solchen Stellen, in denen Bauraum zur Verfügung steht. Der Einsatz von Magneten bietet im Gegensatz zu Federn die zusätzliche Möglichkeit, den Kraftfluss durch ein anderes Bauteil hindurchzuführen, das sich beispielsweise relativ zu den Magneten bewegt. So kann der Kraftfluss beispielsweise durch eine an dem Nabengehäuse angebrachte Dichtung geführt werden, die zwischen zwei Magneten angeordnet ist. Daruas ergeben sich weitere Freiheiten bei der Gestaltung der Nabenanordnung.

Die Magnete werden vorzugsweise zum Erzielen der jeweiligen Kraft derart angeordnet, dass an zwei zueinander vorzuspannenden Komponenten, beispielsweise der Ritzelanordnung und dem zweiten Kupplungsring, einander gegenüberliegende Magnete eingesetzt werden, wobei gleiche Pole einander zugewandt sind, so dass eine abstoßende Magnetkraft erreicht wird. Alternativ ist es natürlich auch möglich, die Anordnung so zu wählen, dass eine anziehende Magnetkraft erreicht wird, beispielsweise bei gegenpoliger Anordnung eines Magneten eines Magnetpaars an dem Nabengehäuse und des anderen Magneten des Magnetpaars am zweiten Kupplungsring.

Hinsichtlich der Verzahnung der beiden Kupplungsringe zur Drehmomentübertragung bzw. zum Erreichen einer Freilaufsituation kann bei einer Freilaufnabe der eingangs bezeichneten Art vorgesehen sein, dass der erste Kupplungsring und der zweite Kupplungsring an ihren einander zugewandten Flächen mit zueinander komplementären Sägezahn-Verzahnungen ausgebildet sind, wobei jeder Sägezahn der Verzahnung eine Übertragungsflanke und eine Gleitflanke aufweist, wobei bei einer Drehmomentübertragung zwischen erstem und zweitem Kupplungsring eine Mehrzahl von Übertragungsflanken des ersten Kupplungsrings mit einer Mehrzahl von Übertragungsflanken des zweiten Kupplungsrings in Eingriff stehen, und wobei in einer drehmomentübertragungsfreien Freilaufsituation die Gleitflanken des ersten Kupplungsrings an den Gleitflanken des zweiten Kupplungsrings abgleiten oder die beiden Kupplungsringe vollkommen kontaktfrei sind.

Die Verwendung einer Sägeverzahnung hat den Vorteil, dass die jeweiligen Zähne nur eine relativ geringe Höhe und damit nur relativ kleinen axialen Bauraum benötigen. Sie können als Stirnverzahnungen an den einander zugewandten Stirnflächen der beiden Kupplungsringe ausgebildet sein. Die Zahnflanken können im wesentlichen planaren oder aber auch diskontinuierlichen Verlauf haben, das heißt die Zahnflanken können in ihrer Steigung unterschiedlich sein, um beispielsweise eine progressive Eingriffswirkung zu erreichen. Die Verwendung einer Sägeverzahnung hat den weiteren Vorteil, dass eine Vielzahl von Zähnen, idealerweise alle Zähne, bei der Drehmomentübertragung mitwirken, was eine günstige und gleichmäßige Kraftverteilung über den gesamten Umfang der jeweiligen Kupplungsringe mit sich bringt und auch die Verwendung von Leichtbauteilen ermöglicht.

Eine Weiterbildung der Erfindung sieht vor, dass im Bereich der Verzahnungen in wenigstens einem der Kupplungsringe Ausnehmungen oder Durchbrüche vorgesehen sind, wobei wenigstens eine Fläche der Ausnehmungen oder Durchbrüche zumindest abschnittsweise die Übertragungsflanke bildet. Dies macht es möglich, die Kupplungsringe nicht massiv auszubilden, sondern mit Ausnehmungen oder Durchbrüchen zu versehen. Dadurch kann weiter Gewicht eingespart werden und die Kupplungsringe können in ihrer axialen Stärke weiter reduziert werden, weil die erforderlichen zur Drehmomentübertragung vorgesehenen Zahnflanken von Flächen der jeweiligen Ausnehmungen oder Durchbrüche gebildet werden. Die Durchbrüche erleichtern auch die Herstellung der Verzahnung, insbesondere bei hinterschnittenen Zähnen, weil die Übertragungsflanken der Zähne leichter über ihre gesamte axiale Länge zugänglich sind.

Eine Ausführungsvariante der Erfindung sieht vor, dass die Übertragungsflanken im Wesentlichen parallel zur axialen Richtung des jeweiligen Kupplungsrings verlaufen. Um einen gegenseitigen Eingriff der beiden Kupplungsringe zu fördern und um dadurch die Drehmomentübertragung zuverlässiger zu gestalten, sieht eine Weiterbildung der Erfindung vor, dass bei beiden Kupplungsringen die Übertragungsflanken - in axialer Richtung betrachtet - jeweils einen Hinterschnitt aufweisen. Dies führt aufgrund der axialen Beweglichkeit wenigstens eines der Kupplungsringe dazu, dass immer dann, wenn beide Kupplungsringe miteinander in Eingriff kommen, die mit Hinterschnitt versehenen Übertragungsflanken zu Gunsten eines zunehmenden gegenseitigen Eingriffs sich aufeinander zu bewegen. Der Hinterschnitt sorgt sozusagen dafür, dass sich die beiden ineinandergreifenden Verzahnungen "gegenseitig anziehen". Gerade bei Kupplungsringen mit Durchbrüchen im Bereich der Verzahnungen lassen sich die hinterschnittenen Zahnflanken wegen der besseren Zugänglichkeit erheblich leichter bearbeiten. Der Winkel des Hinterschnitts an der Übertragungsflanke (Lastflanke) kann 7° bis 20° betragen. Die Neigung der Gleitflanken kann 20° bis 40°, gemessen zu einer achsorthogonalen Ebene betragen. Auch die Neigung der Steuerflanken kann 20° bis 40° betragen.

Ferner kann hinsichtlich der geometrischen Gestaltung der Verzahnungen vorgesehen sein, dass in axialer Richtung betrachtet bei erstem oder/und zweitem Kupplungsring die Ausdehnung der Gleitflanken in Umfangsrichtung jeweils größer bemessen ist als die Breite einer benachbarten Ausnehmung oder eines benachbarten Durchbruchs zwischen dem betrachteten Zahn und dem in Umfangsrichtung folgenden Zahn. Dadurch wird gewährleistet, dass in jeder Situation, auch bei starkem Eingriff der beiden Verzahnungen, im Falle eines Lastwechsels, in dem ein Übergang aus einer Drehmomentübertragungssituation in eine Freilaufsituation erforderlich wird, die Gleitflanken sicher aufeinander abgleiten und so zuverlässig die beiden Kupplungsringe außer Eingriff gebracht werden können. Mit anderen Worten ist durch eine derartige Dimensionierung der Gleitflanken in jedem Betriebszustand gewährleistet, dass in axialer Richtung betrachtet, die Gleitflanken des ersten Kupplungsrings zumindest abschnittsweise mit den Gleitflanken des zweiten Kupplungsrings überlappen und so im Falle eines Lastwechsels aufeinander abgleiten können.

Ferner können die Gleitflanken planar oder diskontinuierlich ausgebildet sein. Im letztgenannten Fall lässt sich durch eine geeignete Konturierung, beispielsweise mit zunehmender Steigung, der Gleitflanken dem zweiten Kupplungsring beim Abgleiten ein axialer Impuls verleihen, der für eine zuverlässige Trennung der beiden Kupplungsringe sorgt.

Eine Ausführungsvariante der Erfindung sieht ferner vor, dass für wenigstens einen der Kupplungsringe ein Axialanschlag in Richtung des jeweils anderen Kupplungsringes vorgesehen ist, der die axiale Bewegung des Kupplungsrings begrenzt. Die Axialbewegung kann durch eine mechanische Federvorspannung oder durch Magenetkräfte bewirkt werden. Ferner kann in diesem Zusammenhang vorgesehen sein, dass das Nabengehäuse mit einem Axialanschlag für den axial beweglichen zweiten Kupplungsring versehen ist. Der Axialanschlag kann integral im Nabengehäuse oder durch Vorsehen eines zusätzlichen Bauteils, beispielsweise eines dämpfenden Kupplungsrings, ausgebildet sein. Dadurch lassen sich auch Anschlaggeräusche dämpfen. In diesem Zusammenhang kann zusätzlich oder alternativ vorgesehen sein, dass das Nabengehäuse mit einem Dämpfungselement für eine gedämpfte Anlage des ersten Kupplungsrings versehen ist. Dieses zur Geräuschminimierung dienende Dämpfungselement kann beispielsweise von einem in dem Nabengehäuse angeordneten Gummiring gebildet sein.

Vorstehend wurde dargelegt, dass eine axiale Verlagerung wenigstens eines der Kupplungsringe durch Aufbringen einer Axialkraft, beispielsweise mittels eines Federelements oder mittels Magnetpaaren, erreicht werden kann. Auch die Gestaltung der Übertragungsflanken mit Hinterschnitt kann eingesetzt werden, um axiale Bewegungen eines oder beider Kupplungsringe nach einem ersten Eingriff der Übertragungsflanken zu erreichen. Zusätzlich oder alternativ ist es auch möglich, ein Steuerelement einzusetzen, das in Abhängigkeit von der Relativdrehrichtung zwischen Nabengehäuse und Ritzelanordnung für eine axiale Verlagerung wenigstens eines der Kupplungsringe sorgt. Dabei kann bei einer Ausführungsvariante der Erfindung vorgesehen sein, dass einem der beiden Kupplungsringe ein Steuerring zugeordnet ist, der mit dem Nabengehäuse oder der Ritzelanordnung drehfest gekoppelt ist. Dieser Steuerring kann eine Steuerverzahnung aufweisen, die mit einer Komplementär-Steuerverzahnung des zugeordneten Kupplungsrings in Eingriff steht, wobei der zugeordnete Kupplungsring unter Einwirkung einer Steuerkraft mit seiner Komplementär-Steuerverzahnung an der Steuerverzahnung abgeleitet, so dass sich eine axiale Bewegung des Kupplungsrings einstellt. Die zur axialen Steuerbewegung wirksamen Steuerflanken der Steuerverzahnung und der KomplementärSteuerverzahnung können zu einer achsorthogonalen Ebene einen Neigungswinkel von 20° bis 40° aufweisen.

Der Steuerring kann beispielsweise fest mit dem Nabengehäuse oder der Ritzelanordnung verbunden sein, insbesondere verstiftet oder anderweitig in diesem fixiert sein.

Um eine Steuerbewegung des jeweils axial zu verlagernden Kupplungsrings zu erreichen, ist es erforderlich, dass dieser relativ zum Steuerring bewegt wird. Dafür reichen bereits geringe Relativbewegungen aus, beispielsweise trägheitsbedingte oder reibmomentbedingte Relativbewegungen. So sieht eine Variante dieser Ausführungsform der Erfindung vor, dass die Steuerkraft über eine Reibkopplung des dem Steuerring zugeordneten Kupplungsrings mit einer relativ zu dem Steuerring drehenden Komponente der Freilaufnabe erzeugt wird. Insbesondere kann in diesem Zusammenhang vorgesehen sein, dass die Komponente eine den Freilauf gegenüber der Umgebung abdichtende Dichtung umfasst. Mit anderen Worten wird der Kupplungsring mit einem Reibabschnitt ausgestaltet, der mit der Dichtung in Reibeingriff steht und somit gegenüber einer Drehung der Ritzelanordnung leicht durch den Reibeingriff gebremst wird. Dadurch ergibt sich eine Art Schleppmoment, mit dem sich eine Axialbewegung durch Abgleiten des Kupplungsrings auf entsprechenden Steuerflächen des Steuerrings erzielen lässt.

Im Folgenden werden verschiedene Ausführungsformen der Erfindung beispielhaft anhand der beiliegenden Figuren erläutert. Es stellen dar:
- Fig.1: eine achsenthaltende Schnittansicht einer ersten Ausführungsform der erfindungsgemäßen Freilaufnabe;
- Fig. 2: eine vergrößerte Darstellung des in Figur 1 mit II gekennzeichneten Bereichs, wobei sich die Nabe in einer Freilaufsituation befindet;
- Fig. 3: eine Darstellung des in Figur 2 gezeigten Bereichs, wobei sich die Nabe in einem Übergangszustand zwischen Freilaufsituation und vollständigem Eingriff zur Drehmomentübertragung befindet;
- Fig. 4: eine Darstellung des in Figuren 2 und 3 gezeigten Bereichs, wobei sich die Nabe in einem Zustand vollständigen Eingriffs zur Drehmomentübertragung befindet;
- Fig. 5a - 5c: verschiedene Ansichten des mit dem Nabengehäuse zur Drehmomentübertragung gekoppelten Kupplungsrings der ersten Ausführungsform;
- Fig. 6a - 6c: verschiedene Ansichten des mit der Ritzelanordnung zur Drehmomentübertragung gekoppelten Kupplungsrings der ersten Ausführungsform;
- Fig. 7a - 7c: verschiedene Ansichten der beiden Kupplungsringe gemäß Fig. 1 bis 6 bei vollständigem Eingriff zur Drehmomentübertragung, wobei die Verzahnung mit Hinterschnitt ausgeführt ist;
- Fig. 8: eine räumliche Darstellung eines alternativen Kupplungsrings mit daran ausgebildeten Axialstiften;
- Fig. 9: eine Darstellung entsprechend dem Ausschnitts gemäß Figur 2 einer weiteren Ausführungsform der Erfindung mit einem zwischen dem Nabengehäuse und dem diesem zugeordneten Kupplungsring angeordneten Steuerring;
- Fig. 10a - 10c: verschiedene Ansichten des mit dem Nabengehäuse zur Drehmomentübertragung gekoppelten Kupplungsrings der zweiten Ausführungsform;
- Fig. 11a - 11c: verschiedene Ansichten des mit der Ritzelanordnung zur Drehmomentübertragung gekoppelten Kupplungsrings der zweiten Ausführungsform;
- Fig. 12a und 12b: verschiedene isolierte Darstellungen der beiden Kupplungsringe sowie des Steuerrings in einer Freilaufsituation der Nabe;
- Fig. 13a und 13b: verschiedene isolierte Darstellungen der beiden Kupplungsringe sowie des Steuerrings in einem Übergangszustand zwischen Freilaufsituation und vollständigem Eingriff der Nabe zur Drehmomentübertragung;
- Fig. 14a und 14b: verschiedene isolierte Darstellungen der beiden Kupplungsringe sowie des Steuerrings in einem Zustand vollständigen Eingriffs der Nabe zur Drehmomentübertragung;
- Fig. 15: eine Schnittansicht durch die erfindungsgemäße Freilaufnabe gemäß Figur 9 entlang der Schnittlinie XV; und
- Fig. 16: eine Ansicht entsprechend Figur 9 einer weiteren Ausführungsform der Erfindung.

### Figurenbeschreibung

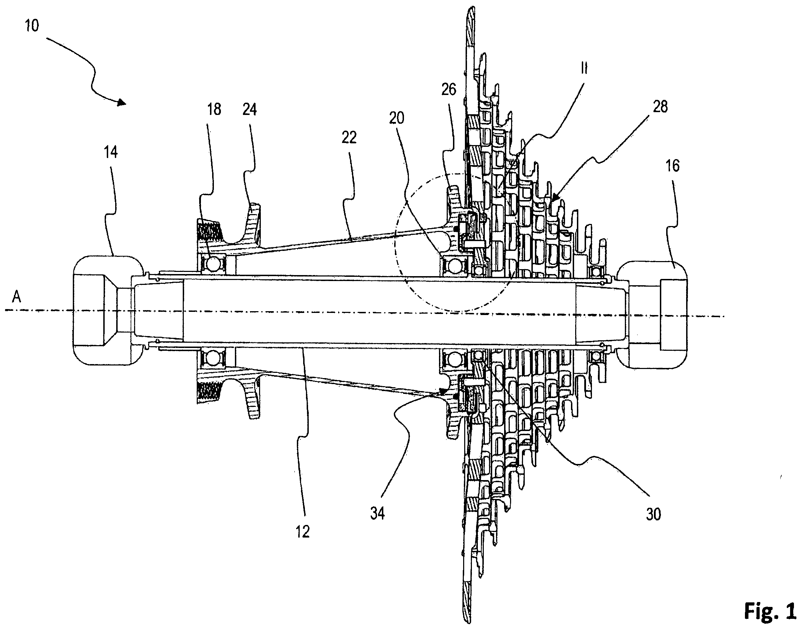

In Figur 1 ist eine Ausführungsform einer erfindungsgemäßen Freilaufnabe in einem achsenthaltenden Schnitt gezeigt und allgemein mit 10 bezeichnet. Die Längsachse der Freilaufnabe 10 ist allgemein mit dem Buchstaben A bezeichnet. Die Freilaufnabe 10 umfasst einen Achskörper 12, in den eine nicht gezeigten Steckachse mit Schnellspannmechanismen einsteckbar ist, über die der Achskörper 12 an Ausläufern 14, 16 eines Fahrradrahmens fixierbar ist.

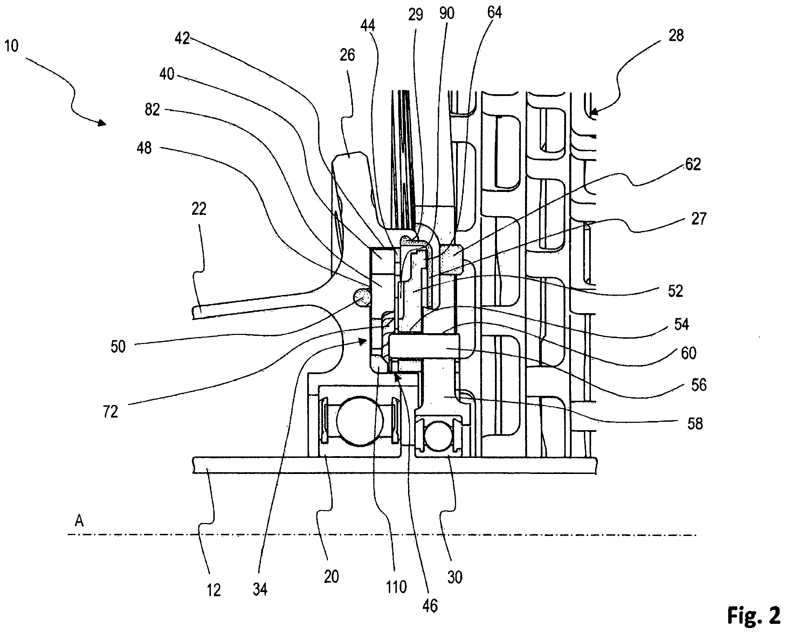

Auf dem Achskörper 12 ist über eine Lageranordnung mit den beiden Wälzlagern 18, 20 ein Nabengehäuse 22 drehbar gelagert. Das Nabengehäuse 22 weist zwei Speichenflansche 24, 26 auf, an denen Speichen in an sich bekannter Weise anbringbar sind. Darüber hinaus erkennt man in der vergrößerten Darstellung von Fig. 2 eine Dichtung 27, die an dem Nabengehäuse 22 über einen Befestigungsabschnitt 29 fest angebracht ist und nach radial einwärts ragt. Ferner ist auf dem Achskörper 12 eine Ritzelanordnung 28 über eine Lageranordnung 30, 32 drehbar gelagert.

Die Ritzelanordnung 28 umfasst im gezeigten Beispielsfall eine Ritzelkassette mit insgesamt 11 Ritzeln, die über eine Antriebskette (nicht gezeigt) mit einer tretkurbelseitigen Kettenradanordnung antriebsmäßig verbunden sind. Treibt ein Fahrradfahrer die Tretkurbeln an, so wird die Antriebsbewegung vom jeweiligen kettenführenden Kettenrad über die nicht gezeigte Antriebskette auf das jeweils von der Ritzelanordnung 28 ausgewählte kettenführende Ritzel übertragen, so dass die Ritzelanordnung drehangetrieben wird. Das wirkende Drehmoment wird über einen in der Folge im Detail erläuterten Freilaufmechanismus 34 auf das Nabengehäuse 22 antriebsmäßig übertragen. Unterbricht der Fahrradfahrer seine Antriebsbewegung oder dreht sich das Nabengehäuse 22 schneller um die Achse A als die Ritzelanordnung 28, beispielsweise bei einer Bergabfahrt, so muss die Freilaufmechanismus 34 außer Eingriff gelangen. Es stellt sich eine Freilaufsituation ein. Die Ritzelanordnung 28 und das Nabengehäuse 22 lassen sich also über den Freilaufmechanismus 34 zur Drehmomentübertragung miteinander drehfest koppeln oder in einer Freilaufsituation drehmomentübertragungsfrei voneinander entkoppeln. Die Dichtung 27 dichtet den Freilaufmechanismus 34 gegenüber äußeren Einflüssen ab.

Figur 2 zeigt den in Figur 1 mit II gekennzeichneten Bereich in vergrößerter Darstellung. Insbesondere erkennt man in Figur 2 den Freilaufmechanismus 34 zur drehmomentübertragenden Verbindung oder zur Entkopplung des Nabengehäuses 22 und der Ritzelanordnung 28. Der Zustand gemäß Figur 2 zeigt eine entkoppelte Stellung in einer Freilaufsituation.

Im Einzelnen erkennt man, dass in dem Nabengehäuse 22 ein erster Kupplungsring 40 aufgenommen ist. Dieser weist an seiner Außenumfangsfläche eine Außenverzahnung 42 auf, die in eine korrespondierende integral im Nabengehäuse 22 ausgebildete Innenverzahnung 44 drehmomentübertragend eingreift. Hierzu weist das Nabengehäuse 22 an seinem in Figur 2 rechten Ende eine axiale Ausnehmung 46 auf, in der der erste Kupplungsring 40 aufgenommen ist. Ferner ist im Nabengehäuse 22 im Bereich dieser axialen Ausnehmung 46 ein axialer Einstich 48 vorgesehen, in dem ein in axialer Richtung geringfügig über den Einstich hinaus stehender dämpfender Gummiring 50 eingelegt ist. Der erste Kupplungsring 40 ist in axialer Richtung verlagerbar relativ zum Nabengehäuse 22 und legt sich gedämpft an den Gummiring 50 an.

In Figur 2 erkennt man ferner einen zweiten Kupplungsring 52, der ebenfalls in axialer Richtung verlagerbar ist. Der zweite Kupplungsring 52 weist eine Reihe von axialen Durchbrüchen 54 auf. In diese axialen Durchbrüche 54 greifen Axialstifte 56, die in regelmäßigen Winkelabständen der Position der axialen Durchbrüche 54 entsprechend in einer Trägerscheibe 58 der Ritzelanordnung 28 fixiert sind. Die Axialstifte 56 sind hierfür in entsprechende Bohrungen 60 in der Trägerscheibe 58 fest eingepresst. Die Durchbrüche 54 im zweiten Kupplungsring 52 sind derart dimensioniert, dass ein leichtes Spiel zwischen den Axialstiften 56 und den Durchbrüchen 54 vorhanden ist, so dass sich der zweite Kupplungsring 52 leicht in axialer Richtung auf den Axialstiften 56 verschieben lässt.

Ferner erkennt man in Figur 2, dass in der Trägerscheibe 58 in regelmäßigen Winkelabständen mehrere Magnete 62 (nur einer davon gezeigt) vorgesehen sind. Korrespondierende Magnete 64 (nur einer gezeigt) sind an dem zweiten Kupplungsring 52 angebracht. Die beiden Magnetpaare 62, 64 sind jeweils derart angeordnet, dass sie an einander zugewandten Seiten gleichpolig sind, so dass der axial beweglich gelagerte zweite Kupplungsring 52 durch die wirkenden abstoßenden Magnetkräfte in Richtung auf den ersten Kupplungsring 40 zu gespannt wird.

Man erkennt in Figur 2 darüber hinaus, dass der erste Kupplungsring 40 in seinem radial äußeren Bereich und in seinem radial mittleren Bereich mit einer größeren Materialstärke ausgeführt ist, als in seinem radial inneren Bereich. Umgekehrt ist der zweite Kupplungsring 52 in seinem radial äußeren Bereich mit geringerer Materialstärke und in seinem radial mittleren und seinem radial inneren Bereich, wo er auch die Axialstifte 56 aufnimmt, mit größerer Materialstärke ausgebildet. Beide Kupplungsringe 40, 52 weisen in ihrem radial mittleren Bereichen mit größerer Materialstärke einander zugewandte Stirnverzahnungen 72, 90 auf, die als Sägeverzahnungen ausgebildet sind.

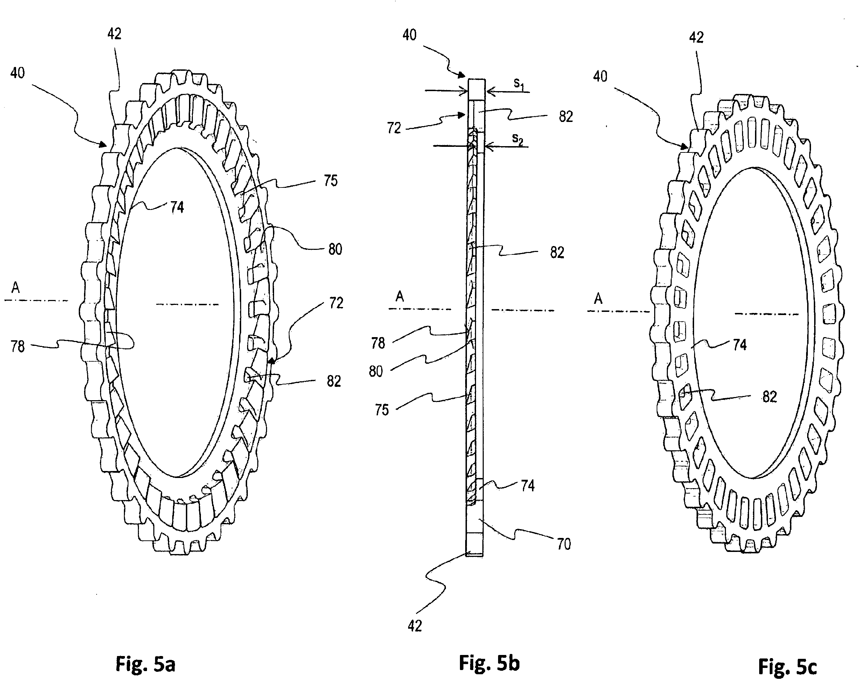

Zur Ausgestaltung der beiden Kupplungsringe wird im Folgenden auf die Figuren 5a bis 5c, die Figuren 6a bis 6c und die Figuren 7a bis c eingegangen.

Die Figuren 5a bis 5c zeigen den ersten Kupplungsring 40 in verschiedenen Ansichten. Dabei zeigt Figur 5a eine räumliche Ansicht mit seitlicher Blickrichtung auf diejenige Stirnfläche, an der die Stirnverzahnung vorgesehen ist und die dem zweiten Kupplungsring 52 zugewandt ist. Figur 5b zeigt eine achsenthaltende Schnittansicht und Figur 5c zeigt eine Ansicht entsprechend Figur 5a, jedoch mit seitlicher Blickrichtung auf diejenige Stirnfläche, die dem Nabengehäuse 22 zugewandt ist.

Der erste Kupplungsring 40 weist, wie klar in den Figuren erkennbar, die Außenverzahnung 42 auf, mit der er in Eingriff mit der Innenverzahnung 44 des Nabengehäuses 42 steht. Die Außenverzahnung 42 ist in axialer Richtung geradlinig verlaufend vorgesehen. Ferner erkennt man insbesondere in den Figuren 5a und 5b die unterschiedlichen Materialstärken. Im radial äußeren Bereich 70 und im radial mittleren Bereich, in dem die Verzahnung 72 vorgesehen ist, besitzt der erste Kupplungsring 40 eine Materialstärke s₁. Im radial inneren Bereich 74 hingegen ist der erste Kupplungsring 40 mit reduzierter Materialstärke s₂ ausgeführt.

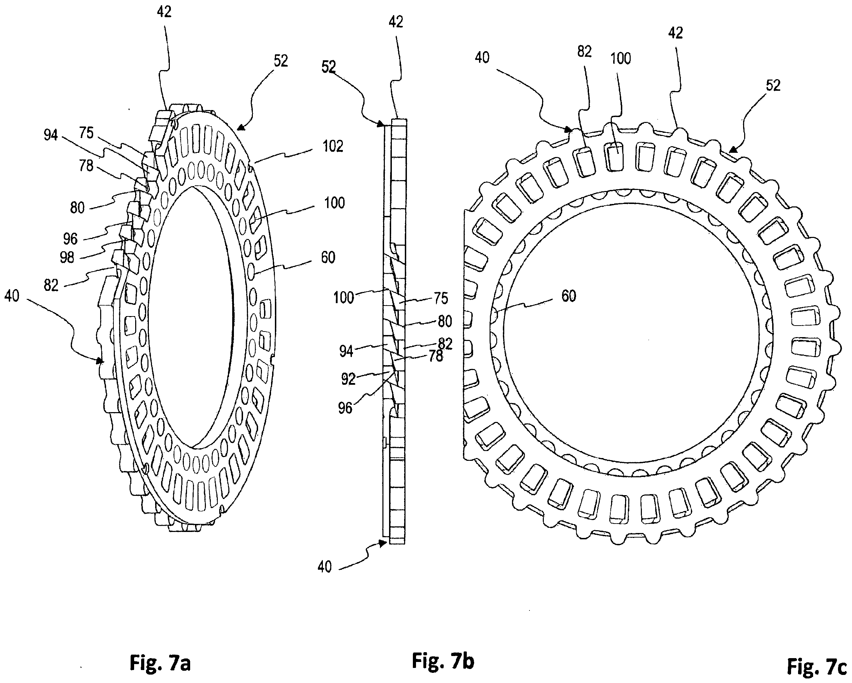

Wie man insbesondere in den Figuren 5b und 5c erkennt, sind die einzelnen Zähne 75 der Verzahnung 72 mit Sägezahnprofil ausgebildet, wobei jeder Zahn 75 eine Gleitflanke 78 und eine Übertragungsflanke 80 aufweist. Die Gleitflanken 78 sind dazu vorgesehen, um ein Abgleiten des zweiten Kupplungsrings 52 am ersten Kupplungsring 40 im Falle einer Freilaufsituation zu gewährleisten. Die Übertragungsflanken 80 sind mit Hinterschnitt ausgebildet und dazu vorgesehen, um einen sicheren drehmomentübertragenden Eingriff mit den komplementären Übertragungsflanken des zweiten Kupplungsrings 52 zu gewährleisten. Hierauf wird im Folgenden noch mit Bezug auf Figuren 7a bis 7c eingegangen. Die Übertragungsflanken 80 haben eine Neigung zur Achsrichtung von etwa 10°. Die Gleitflanken 78 haben eine Neigung zu einer achsorthogonalen Ebene von etwa 20°.

Ferner erkennt man, dass zwischen benachbarten Zähnen jeweils ein den Kupplungsring 40 durchsetzender Durchbruch 82 vorgesehen ist. Jeweils eine radial verlaufende Fläche des Durchbruchs 82 bildet einen Teil der Übertragungsflanke 80, so dass deren Fläche, insbesondere der Hinterschnitt der Übertragungsflanke 80, einfacher bearbeitet werden können.

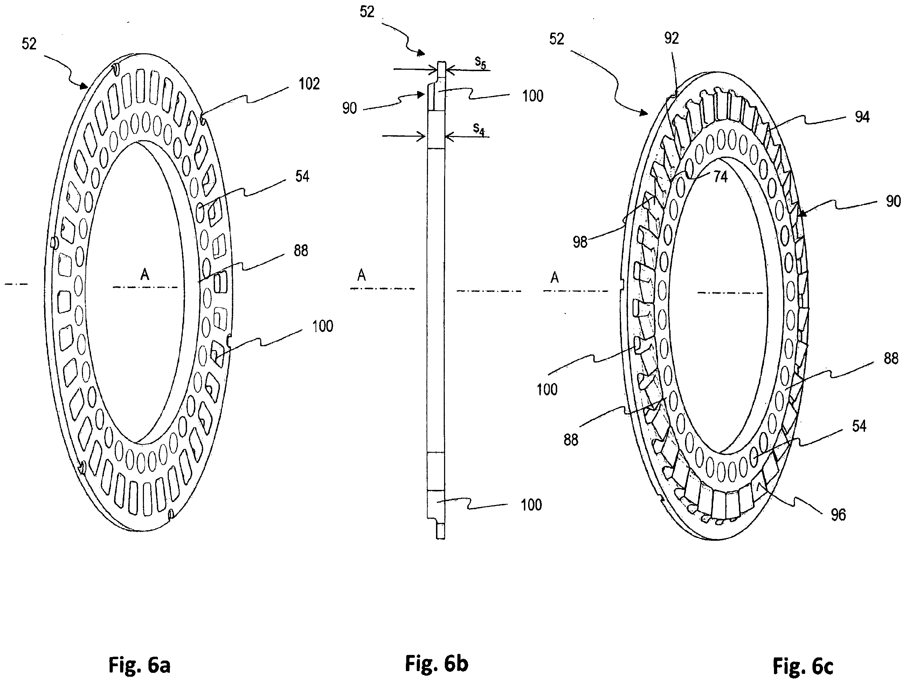

Figuren 6a bis 6c zeigen den zweiten Kupplungsring 52, wobei Figur 6a eine räumliche Ansicht mit seitlicher Blickrichtung auf diejenige Stirnfläche zeigt, die der Ritzelanordnung 28 zugewandt ist. Figur 6b zeigt eine achsenthaltende Schnittansicht und Figur 6c zeigt eine Ansicht entsprechend Figur 6a jedoch mit seitlicher Blickrichtung auf diejenige Stirnfläche, an der die Stirnverzahnung 90 vorgesehen und die dem ersten Kupplungsring 40 zugewandt ist.

Der zweite Kupplungsring 52 weist, wie klar in den Figuren erkennbar, keine Außenverzahnung auf, sondern einen Lochkreis mit einer Vielzahl von Löchern 54, die, wie in Figur 2 gezeigt, die Axialstifte 60 der Trägerscheibe 58 der Ritzelanordnung 28 aufnehmen und auf diesen axial geführt sind. Ferner erkennt man insbesondere in den Figuren 6b und 6c die unterschiedlichen Materialstärken. Im radial inneren Bereich 88, in dem der Lochkreis mit den Durchbrüchen 54 angeordnet ist, und im radial mittleren Bereich, in dem die Verzahnung 90 vorgesehen ist, besitzt der zweite Kupplungsring 52 eine Materialstärke s₄. Im radial äußeren Bereich 92 hingegen ist der zweite Kupplungsring 52 mit reduzierter Materialstärke s₅ ausgeführt.

Wie man insbesondere in den Figuren 6b und 6c erkennt, sind die einzelnen Zähne 94 der Verzahnung 90 wiederum mit Sägezahnprofil ausgebildet, wobei jeder Zahn 94 eine Gleitflanke 96 und eine Übertragungsflanke 98 aufweist. Die Gleitflanken 96 sind dazu vorgesehen, um ein Abgleiten des zweiten Kupplungsrings 52 an den korrespondierenden Gleitflanken 78 am ersten Kupplungsring 40 im Falle einer Freilaufsituation zu gewährleisten. Die Übertragungsflanken 98 sind dazu vorgesehen, um einen drehmomentübertragenden Eingriff mit den komplementären Übertragungsflanken 80 des ersten Kupplungsrings 40 zu gewährleisten. Hierauf wird im Folgenden noch mit Bezug auf Figuren 7a bis 7c eingegangen. Ferner erkennt man, dass zwischen benachbarten Zähnen jeweils ein den zweiten Kupplungsring 52 durchsetzender Durchbruch 100 vorgesehen ist. Jeweils eine radial verlaufende Fläche des Durchbruchs 100 bildet einen Teil der Übertragungsflanke 98.

Im Folgenden soll auf die Funktionsweise mit Bezug auf Figuren 2 bis 4 eingegangen werden:
Fig. 2 zeigt, wie vorstehend bereits erläutert, die Freilaufsituation, in der die beiden Kupplungsringe 40, 52 außer Eingriff sind. Die Situation liegt beispielsweise dann vor, wenn das Fahrrad rollt, der Fahrradfahrer aber nicht die Tretkurbeln antreibt, oder wenn aus anderen Gründen das Nabengehäuse schneller 22 dreht als die Ritzelanordnung 28, etwa bei einer Bergabfahrt. In dieser Situation gleiten die Gleitflächen 78 und 96 aufeinander ab. Die beiden Verzahnungen 72 und 90 stehen nicht miteinander in Eingriff.

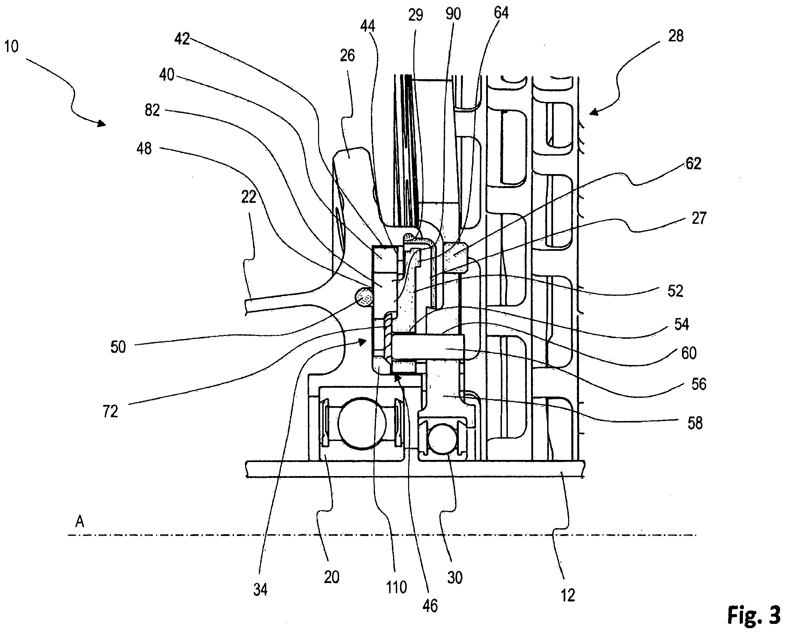

Fig. 3 zeigt einen Übergangszustand, bei dem die beiden Verzahnungen 72 und 90 bereits teilweise, jedoch noch nicht vollständig ineinandergreifen. Bedingt durch eine Situation, in der sich die Ritzelanordnung 28 mindestens so schnell wie oder schneller dreht als das Nabengehäuse 22, wird der zweite Kupplungsring 52 durch die Wirkung des Magneten 62 und des Komplementärmagneten 64 in Figur 3 in axialer Richtung - geführt auf den Axialstiften 56 - nach links verlagert, so dass die beiden Verzahnungen 72 und 90 miteinander in Eingriff gelangen. Dabei liegen die Übertragungsflanken 80 und 98 aneinander an, so dass bereits eine Drehmomentübertragung erfolgt. Allerdings kann sich der zweite Kupplungsring 52 nicht weiter in Figur 3 in axialer Richtung auf den Axialstiften 56 nach links verlagern, weil der Kupplungsring 52 mit seinem radial innenliegenden Abschnitt an einem in dem Nabengehäuse 22 aufgenommenen Anschlagring 110 zur Anlage kommt. Dieser Anschlagring 110 kann aus Kunststoff oder einem anderweitigen dämpfenden Material hergestellt sein.

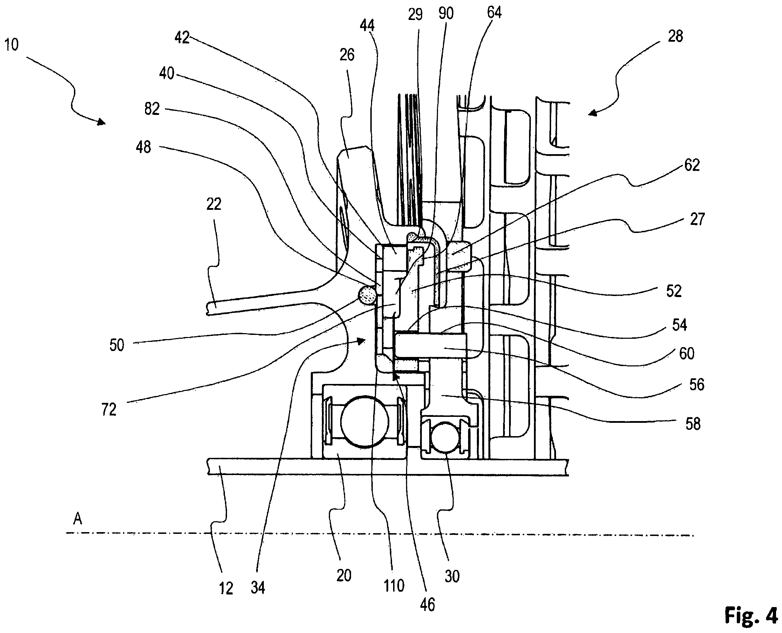

Fig. 4 zeigt einen Zustand vollständigen Eingriffs. Dabei ist der erste Kupplungsring 40 unter der Wirkung des Hinterschnitts der beiden Übertragungsflanken 80 und 98 der Verzahnungen 72 und 90 (wie in Figuren 7a bis 7c auch), axial nach rechts verlagert, wobei immer noch in drehmomentübertragenden Eingriff mit dem Nabengehäuses 22 über die Außenverzahnung 42 und die Innenverzahnung 44 steht. Der Hinterschnitt der Verzahnungen 72 und 90 sorgt dafür, dass der erste Kupplungsring 40 in axialer Richtung an den axial durch den Anschlag 110 blockierten zweiten Kupplungsring 52 herangezogen wird bzw. wurde. Fig. 4 zeigt also den Zustand maximalen Eingriffs der beiden Verzahnungen 72 und 90.

Durch die Vielzahl der an der Drehmomentübertragung beteiligten Zähne der beiden ineinandergreifenden Verzahnungen 72 und 90 ergibt sich eine gleichmäßige Kraftverteilung über den gesamten Umfang der beiden Kupplungsringe 40, 52. Dies wird dadurch begünstigt, dass die Zähne 75 und 95 wegen der Durchbrüche 82 und 100 unter Last leicht deformierbar sind, so dass sich die Kräfte besser verteilen können. Der Drehmomentfluss bzw. der Kraftfluss läuft ausgehend von der Ritzelanordnung 28 über die Trägerscheibe 58, die Axialstifte 56 auf den zweiten Kupplungsring 52, von diesem über die ineinander greifenden Verzahnungen, das heißt insbesondere über die Übertragungsflanken 80 und 98 zum ersten Kupplungsring 40 und von diesem unmittelbar in das Nabengehäuse 22 zum Antreiben des Hinterrads.

Sobald sich das Nabengehäuse 22 und damit der erste Kupplungsring 40 schneller dreht als der zweite Kupplungsring 52 mit der Ritzelanordnung, gelangen die hinterschnittenen Übertragungsflanken 80 und 98 wieder außer Eingriff. Die Zähne 75 und 94 gleiten mit ihren Gleitflanken 78 und 96 aneinander ab. Der erste Kupplungsring 40 und der zweite Kupplungsring 52 bewegen sich unter Vermittlung dieser Gleitbewegung wieder in axialer Richtung in seine Ausgangsstellung, wobei sie sich gedämpft an das Nabengehäuse 22 bzw. die Ritzelanordnung 28 anlegen, so dass Anschlaggeräusche minimiert werden.

Fig. 7a bis 7c zeigen zur Erläuterung einen Eingriffszustand der beiden Kupplungsscheiben 40 und 52 der ersten Ausführungsform der Erfindung, bei der die einzelnen Zähne 75 und 94 jeweils mit einem Hinterschnitt von etwa 20° Grad, an den Übertragungsflanken 80 und 98 versehen sind, wie nochmals deutlich in den Figuren 7a und 7b zu erkennen ist. Die Darstellungen zeigt einen Zustand, in dem die beiden Kupplungsringe 40 und 52 in vollständigem Eingriff miteinander stehen, wobei in der Ansicht gemäß Figur 7a die beiden Kupplungsringe 40 und 52 zur Verdeutlichung der Eingriffsituation an den Übertragungsflanken 80 und 98 einzelner Zähne zum Teil weggeschnitten sind. Eine solche Ausbildung der Zähne mit Hinterschnitt hat den Vorteil, dass bei Erreichen des Zustands gemäß Figur 3 die Übertragungsflanken 80 und 98 in Richtung eines zunehmenden Eingriffs aneinander abgleiten.

Ferner erkennt man in Fig. 7a dass die beiden Gleitflanken 78 und 96 in radialer Richtung derart groß dimensioniert sind, dass sie selbst bei maximalem Eingriffszustand der beiden Verzahnungen 72 und 90 noch mit einem Flächenabschnitt aneinanderliegen, so dass bei einem in der Folge auftretenden Lastwechsel die beiden Gleitflanken 78 und 96 aneinander abgleiten können und die Kupplungsringe auseinandertreiben.

Ferner erkennt man in Figur 7a zusätzlich zu der Darstellung gemäß Figur 6a noch eine Reihe von Ausnehmungen 102 zur Aufnahme von Magneten.

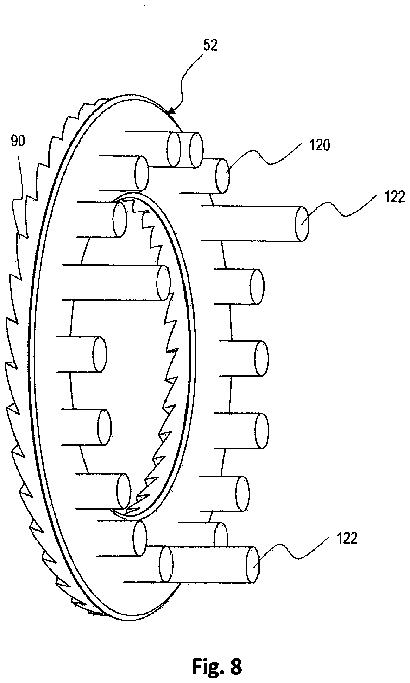

Fig. 8 zeigt einen Kupplungsring 52 mit daran angeformten Axialstiften 120. Alternativ zu einer Ausgestaltung, bei der Kupplungsring mit einem Lochkreis zu sehen ist, sind an diesem Kupplungsring unmittelbar die Axialstifte 120, 122 angeformt oder fest angebracht, beispielsweise in entsprechenden Öffnungen. Diese Axialstifte haben unterschiedliche Längen, wobei jeweils fünf kurze Axialstifte 120 in gleichen Winkelabständen angeordnet sind und wobei jeder sechste Axialstift 122 mit größerer axialer Länge ausgebildet ist. Die Axialstifte 120, 122 werden in entsprechenden axialen Ausnehmungen (nicht gezeigt) in der Trägerscheibe 58 der Ritzelanordnung 28 axial verschieblich aufgenommen. Ferner erkennt man in Figur 8 die Sägeverzahnung 90, die in dieser Ausführung mit gerundeter Gleitflankenprofilierung ausgeführt ist und somit eine diskontinuierliche Gleitflankensteigung aufweist.

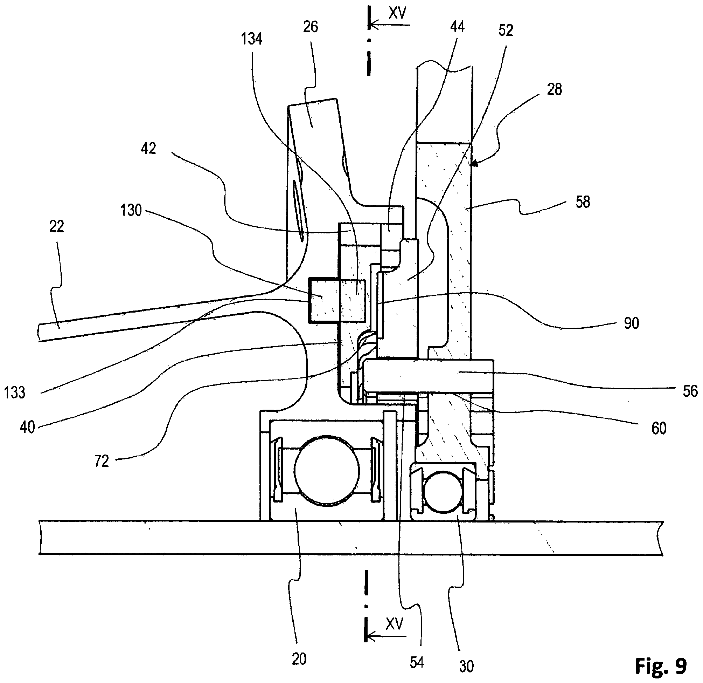

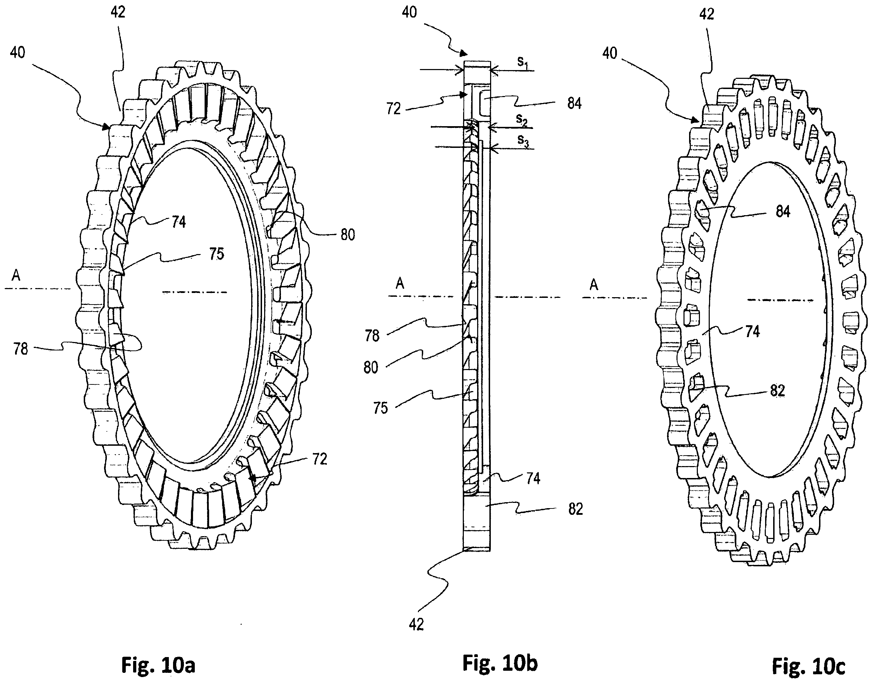

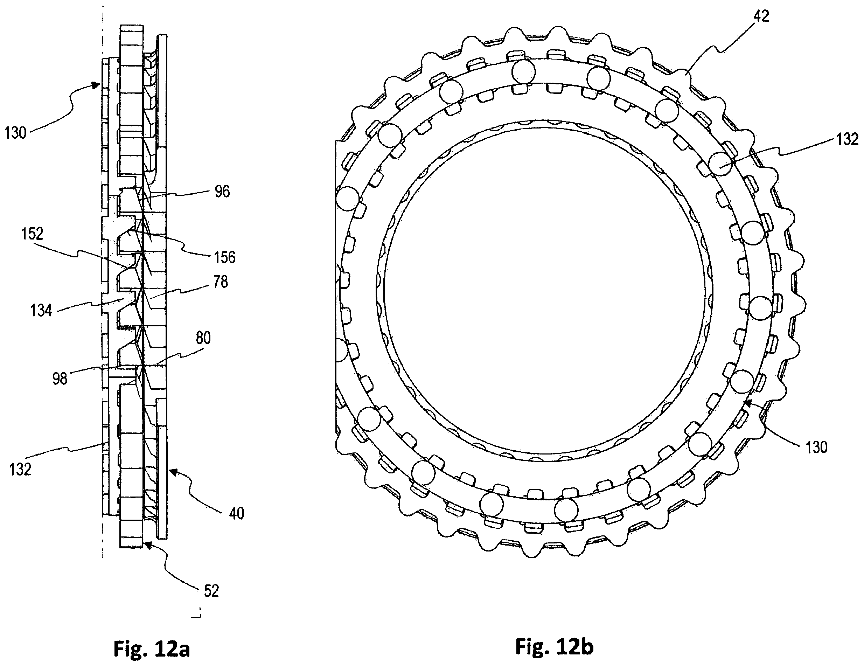

Fig. 9 bis 14 zeigen eine weitere Ausführungsform der Erfindung mit einem Steuerring 130. Zur Vereinfachung der Darstellungen ist die Ritzelkassette nicht gezeigt. Der Steuerring 130 ist mit Vorsprüngen 132 versehen, über die er in korrespondierenden Ausnehmungen 133 am Nabengehäuse 22 drehfest angebracht ist. Man erkennt die Vorsprünge 132 insbesondere in den Darstellungen gemäß Figuren 12a bis 14b. Der Steuerring 130 bleibt auch in seiner axialen Position fest, wobei er an dem Nabengehäuse 22 (dreh-)fixiert ist. Hierfür weist der Steuerring 130 axial vorspringende Steuerzähne 134 auf. Diese greifen in die Durchbrüche 82 zwischen den Zähnen 75 in dem ersten Kupplungsring 40. Die Durchbrüche 82 sind in den Figuren 10a-c, 12a, 12b, 13a, 13b und 14a, 14b gezeigt. Sie sind mit einer rückseitigen Steuerfläche 84 versehen, die mit den Steuerzähnen 134 zusammenwirkt, um eine Steuerbewegung des ersten Kupplungsrings 40 zu bewirken. Hierauf wird im Folgenden noch im Detail eingegangen.

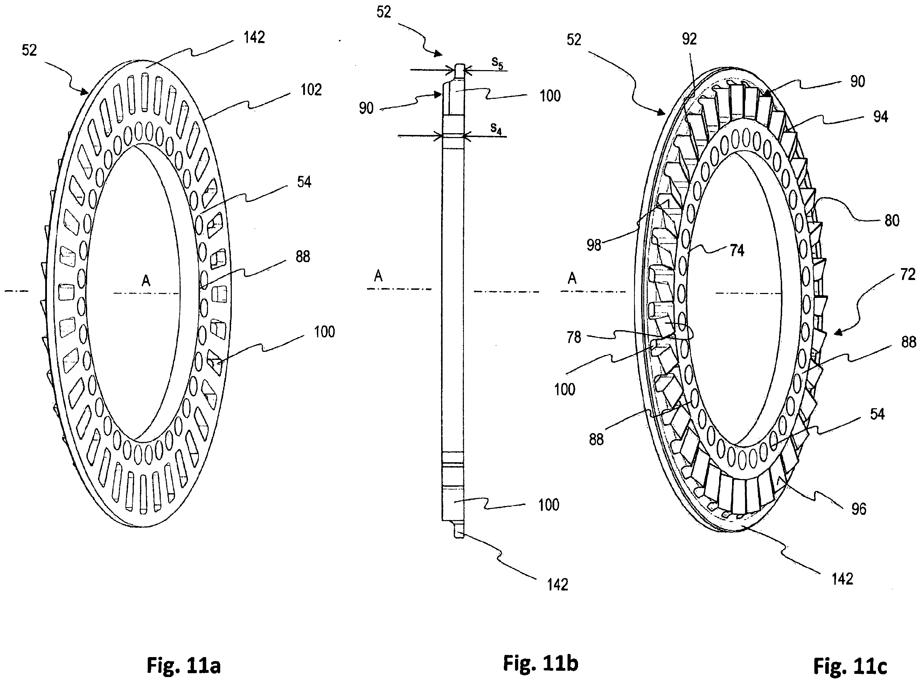

Der zweite Kupplungsring 52 gemäß Figuren 11a-c weist, wie bereits mit Bezug auf die erste Ausführungsform beschrieben, Öffnungen 54 auf, in die die Axialstifte 56 hineinragen. Die Axialstifte 56 sind in die Trägerscheibe 58 eingepresst. Der zweite Kupplungsring 52 ist axialbeweglich auf den Axialstiften 56 geführt und kann entlang diesen axial verschoben werden.

Ferner sei erwähnt, dass der erste Kupplungsring 40 mit seiner Außenverzahnung 42 in der korrespondierenden Innenverzahnung 44 im Nabengehäuse 22 mit einem gewissen Umfangspiel von wenigen Grad aufgenommen ist, vorzugsweise im Bereich von 2-5°. Dadurch besitzt der erste Kupplungsring 40 eine gewisses Drehspiel relativ zum Nabengehäuse, bevor die beiden Verzahnungen 42, 44 nach einem Lastwechsel in drehmomentübertragenden Eingriff gelangen. Beide Kupplungsringe 40 und 52 weisen wieder einander zugewandte Verzahnungen 72 und 90 auf, wie vorstehend beschrieben.

An ihrem von der Verzahnung abgewandten Bereich sind die Durchbrüche 82 des ersten Kupplungsrings 40, wie in Figur 10c gezeigt, jeweils mit einer Einlaufschräge 84 versehen. Diese dient als Steuerfläche, wenn der erste Kupplungsring 40 zusammen mit dem Steuerring 130 eingesetzt wird, wie im Folgenden noch im Detail erläutert werden wird.

Zur Beschreibung der Funktionsweise der Ausführungsform gemäß Figur 9 wird im Folgenden auf die Figuren 12a, 12b, 13a, 13b und 14a, 14b im Detail eingegangen. Diese zeigen jeweils den ersten Kupplungsring 40, den zweiten Kupplungsring 52 sowie den Steuerring 130.

Der Steuerring 130 weist an seiner dem Nabengehäuse 22 zugewandten Seite die bereits erwähnten axial vorstehende Zapfen 132 auf, mit denen der Steuerring 130 fest, insbesondere drehfest, mit dem Nabengehäuse 22 verbunden ist. Auf der dem ersten Kupplungsring 40 zugewandten Seite weist der Steuerring 130 die Steuerzähne 134 auf. Die Steuerzähne 134 weisen eine in der Schnittansicht gemäß Figur 12a in der Draufsicht in einem Winkel von etwa 40° verlaufende Steuerflanke 152 auf. Die Steuerzähne 134 greifen in Zahnzwischenräume 82 des ersten Kupplungsrings 40, der im Wesentlichen so ausgebildet ist, wie in den Figuren 5a bis 5c für den ersten Kupplungsring 40 gezeigt. Diese Zahnzwischenräume 82 sind mit bereits erwähnten den Steuerflanken 152 jeweils zugewandten Komplementär-Steuerflanken 84 versehen, die ebenfalls eine Neigung von etwa 40° aufweisen. Ansonsten sind der erste Kupplungsring 40 und der zweite Kupplungsring 52 so ausgebildet, wie mit Bezug auf Figuren 5a bis 5c und 6a bis 6c beschrieben. Mit anderen Worten sind die Übertragungsflanken 80 bzw. 98 ohne Hinterschnitt in axialer Richtung verlaufend ausgebildet. Ferner weisen die Zähne Gleitflanken 78 bzw. 96 auf, die zur Herbeiführung einer Freilaufsituation einander zugewandt sind.

In Figuren 12a und 12b ist die Freilaufsituation dargestellt. Die Übertragungsflanken 80 und 98 stehen nicht miteinander in Eingriff. Die beiden Kupplungsringe 40, 52 sind frei zueinander drehbar.

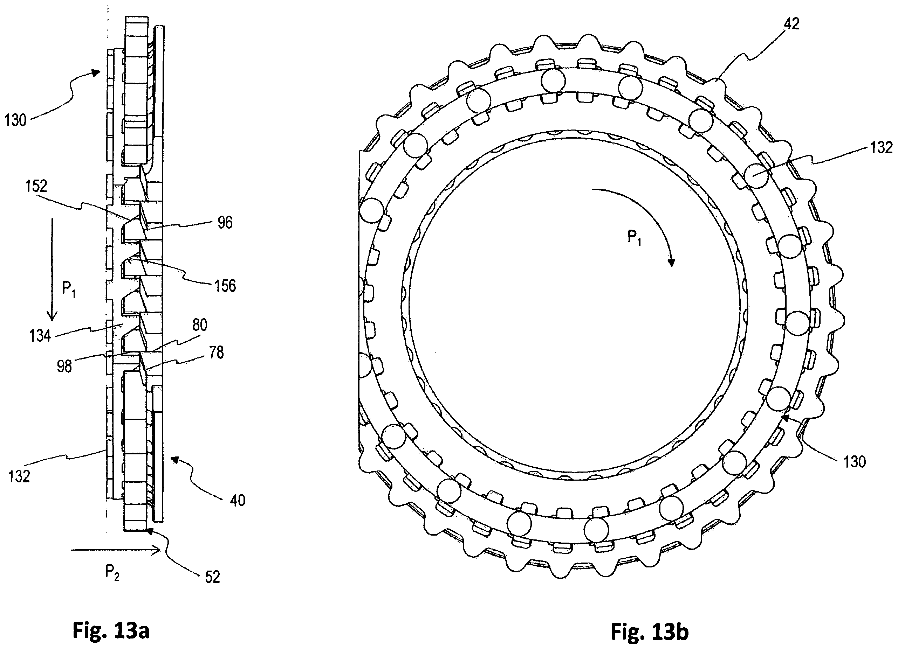

Kommt es nun zu einer Antriebsbewegung durch den Fahrradfahrer, indem er die Tretkurbeln antreibt, so wird der über die Axialstifte 56 drehfest mit der Ritzelanordnung 28 verbundene zweite Kupplungsring 52 gegebüber dem ersten Kupplungsring 40 im Uhrzeigersinn (Fig. 12b, 13b , 14b) angetrieben. Der zweite Kupplungsring 52 wird dabei durch eine in Richtung des ersten Kupplungsringes 40 wirkende Federkraft axial ausgelenkt, so dass sich der in Fig. 13a, b dargestellte Zustand einer geringen Überlappung der Übertragungsflanken einstellt. Die Federkraft kann durch eine Druckfeder oder durch Magnete (beides hier zur Vereinfachung nicht gezeigt) aufgebracht werden.

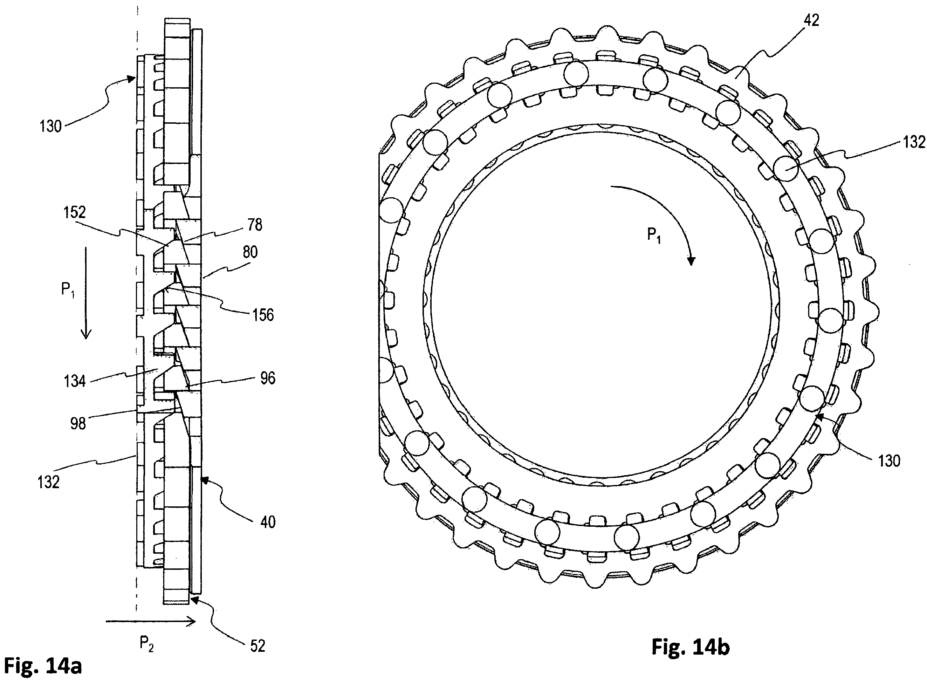

Bei weiterer Antriebsbewegung treibt der zweite Kupplungsring 52 den ersten Kupplungsring 40 über die ineinandergreifenden Verzahnungen 72, 90 an, so dass der erste Kupplungsring 40 mit seinen Komplementär-Steuerflanken 84 auf den Steuerflanken 152 des relativ gesehen feststehenden Steuerrings 130 abgleitet und somit zu einer axialen Bewegung in Richtung des zweiten Kupplungsringes 52 gezwungen wird. Diese "Schraubbewegung" des ersten Kupplungsringes 40 wird ausgeführt, bis die Lastflanken der Außenverzahnung 40, 42 in krafübertragende Anlage mit der Innenverzahnung 44 des Nabengehäuses 22 gelangen und somit die Drehmomentübertragung auf das Nabengehäuse 22 beginnt. In diesem Zustand ist nun auch die maximale Überlappung der Übertragungsflanken der Kupplungsringe erreicht (Fig. 14a, b).

Diese Relativbewegung zwischen dem ersten Kupplungsring 40 und dem Nabengehäuse 22 ist in einem solchen Umfang möglich, wie das Verzahnungsspiel in den Verzahnungen 40, 44 eine solche Relativverdrehung zwischen dem Nabengehäuse 22 und dem ersten Kupplungsring 40 zulässt, das heißt bis dieses Verzahnungsspiel aufgebraucht ist. Dieses Bewegungsspiel des ersten Kupplungsrings 40 in Umfangsrichtung ist abgestimmt auf die im Folgenden nochmals im Detail beschriebene Steuerbewegung über die Steuerzähne 134.

Während der Relativverdrehung zwischen dem ersten Kupplungsring 40 und dem Steuerring 130 gleiten die Zähne des ersten Kupplungsrings 40 mit ihren Komplementär-Steuerflanken 84 auf den Steuerflanken 152 der Steuerzähne 134 ab, was zu einer Axialbewegung des ersten Kupplungsrings 40 entsprechend Pfeil P₂ führt. Dadurch werden die Zähne 75 des ersten Kupplungsrings 40 in drehmomentübertragenden Eingriff mit den Zähnen 92 des zweiten Kupplungsrings 52 gebracht, wobei die Übertragungsflanken 98 und 80 in drehmomentübertragenden Eingriff gelangen. Figuren 13a und 13b zeigen einen Übergangszustand.

Bei Abschluss dieser axialen Bewegung des zweiten Kupplungsrings 52 entsprechend dem Pfeil P₂ befinden sich die Übertragungsflanken 80 und 98 in maximal möglichem Eingriff, wobei die Gleitflanken 78 und 96 mit einem einander zugewandten Abschnitt in gegenseitiger Anlage stehen. Die beiden Kupplungsringe 40 und 52 sind maximal einander angenähert und stehen in maximalem gegenseitigem Eingriff. Der Zustand maximalen Eingriffs ist in den Figuren 14a und 14b gezeigt.

Durch die Vielzahl der an der Drehmomentübertragung beteiligten Zähne 75, 94 ergibt sich eine gleichmäßige Kraftverteilung über den gesamten Umfang der beiden Kupplungsringe 40, 52. Der Drehmomentfluss bzw. der Kraftfluss läuft ausgehend von der Ritzelanordnung 28 über die Trägerscheibe 58, die Axialstifte 56 auf den zweiten Kupplungsring 52, von diesem über die ineinander greifenden Verzahnungen 72, 90, das heißt insbesondere über die Übertragungsflanken 80 und 98 der Zähne 75, 94, zum ersten Kupplungsring 40 und von diesem über die zusammenwirkenden Verzahnungen 42,44 unmittelbar in das Nabengehäuse 22 zum Antreiben des Hinterrads.

Sobald sich das Nabengehäuse 22 und damit der erste Kupplungsring 40 schneller dreht als der zweite Kupplungsring 52 mit der Ritzelanordnung 28, gelangen die Übertragungsflanken 80 und 98 außer Eingriff. Die Zähne 75, 94 gleiten mit ihren Gleitflanken 78 und 96 aneinander ab. Der zweite Kupplungsring 52 bewegt sich unter Vermittlung dieser Gleitbewegung wieder in axialer Richtung entgegen Pfeil P₂ in seine Ausgangsstellung gemäß Figuren 12a und 12b zurück.

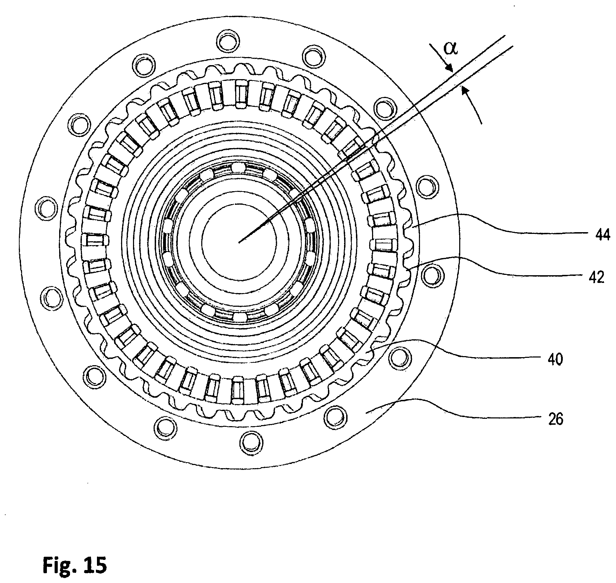

Fig. 15 zeigt eine Ansicht entsprechend der Schnittlinie XV-XV aus Figur 9. Neben den vorstehend bezeichneten Komponenten erkennt man darin insbesondere das Verzahnungsspiel α in Umfangsrichtung zwischen den beiden Verzahnungen 42 und 44.

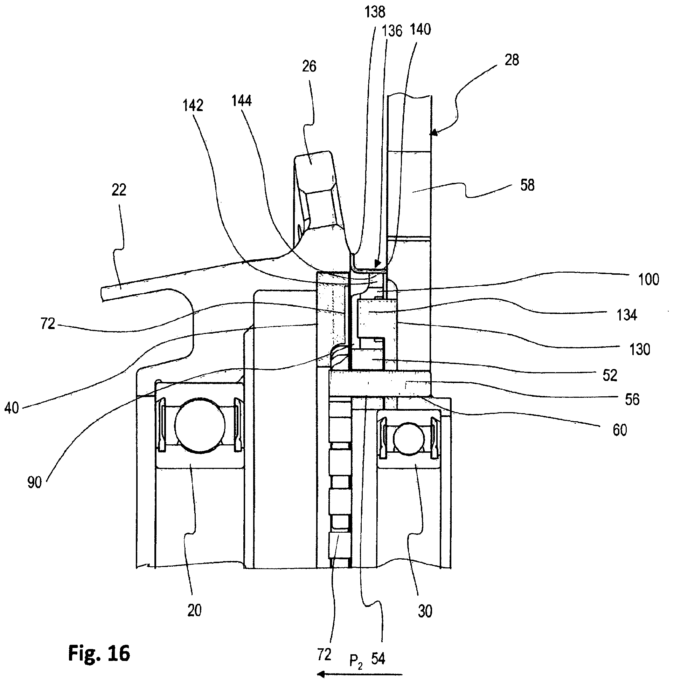

Fig. 16 zeigt in einer Ansicht ähnlich der Ansicht gemäß Figur 9 eine weitere Ausführungsform der Erfindung mit einem Steuerring 130, wobei der Steuerring 130 der Trägerscheibe 58 zugeordnet ist. Der Steuerring 130 ist ebenfalls mit einem Lochkreis mit Öffnungen 132 versehen. Allerdings ist der Steuerring 130 fest auf den Axialstiften 56 angebracht und bleibt in seiner axialen Position fest, so dass er an der Trägerscheibe 58 fixiert ist. Der Steuerring 130 weist axial vorspringende Steuerzähne 134 auf. Diese greifen in die Ausnehmungen 100 zwischen den Zähnen 94 in dem zweiten Kupplungsring 52. Sie sind mit einer rückseitigen Profillierung versehen, wie dies vorstehend mit Bezug auf die Komplementär-Steuerfläche 84 beschrieben wurde.

Der erste Kupplungsring 40 gemäß Figuren 10a-c ist in das Nabengehäuse 22 eingepresst und relativ zu diesem über seine Außenverzahnung 42 drehfest sowie axial unbeweglich.

Zwischen dem Nabengehäuses 22 und der Trägerscheibe 58 ist eine an dem Nabengehäuse fixierte Dichtung 136 vorgesehen. Diese weist einen Befestigungsabschnitt 138 auf, mit dem sie am Nabengehäuse 22 befestigt ist, und weist ferner einen den Zwischenraum zwischen Nabengehäuse 22 und Trägerscheibe 58 überbrückenden Dichtungsabschnitt 140 auf.

Der zweite Kupplungsring 52 weist einen radial äußeren Abschnitt 142 auf, der an seinem radial äußeren Ende eine Reibfläche 144 aufweist, die kreisförmig oder zahnförmig ausgebildet sein kann. Im vorliegenden Fall ist diese kreisförmig ausgebildet. Diese Reibfläche 144 steht mit ihrer radial äußeren Fläche in Reibkontakt mit der Innenoberfläche des Dichtungsabschnitts 140.

Ferner sei erwähnt, dass der zweite Kupplungsring 52 wieder Öffnungen 54 zur Aufnahme der Axialstifte 56 aufweist. Diese Öffnungen 54 sind aber als Langlöcher ausgebildet, die dem zweiten Kupplungsring 52 ein gewisses Umfangspiel von wenigen Grad verleihen, vorzugsweise im Bereich von 2-5°. Dieses Bewegungsspiel in Umfangsrichtung bietet dem zweiten Kupplungsring 52 die Möglichkeit einer Relativbewegung zur Trägerscheibe 58 in Umfangsrichtung, ähnlich wie im Hinblick auf das Verzahnungsspiel zu der Verzahnung 42,44 der Ausführungsform gemäß Figuren 9 bis 15 beschrieben. Beide Kupplungsringe 40 und 52 weisen wieder einander zugewandte Verzahnungen 72 und 90 auf, wie vorstehend beschrieben.

Die Funktionsweise dieser Ausführungsform ist ähnlich der Funktionsweise der vorstehend beschriebenen Ausführungsform:
Kommt es zu einer Antriebsbewegung durch den Fahrradfahrer, indem er die Tretkurbeln treibt, so wird der fest mit der Ritzelanordnung (nicht gezeigt) und deren Trägerscheibe 58 gekoppelte Steuerring 130 drehangetrieben. Dies erfolgt durch die unmittelbare Kopplung über die Axialstifte 56 und des Steuerrings 130. Aufgrund des Reibkontakts zwischen der Reibfläche 144 im Außenumfangsbereich des zweiten Kupplungsrings 52 und der Dichtung 136 tendiert der zweite Kupplungsring 52 dazu, sich mit dem Nabengehäuse 22 mitzudrehen, so dass er für kurze Zeit gegenüber der Drehbewegung der Trägerscheibe 58 entsprechend der Antriebsbewegung zurückbleibt. Dies ist in einem solchen Umfang möglich, wie die Langlöcher 54 eine Relativverdrehung zwischen der Trägerscheibe 58 und dem zweiten Kupplungsring 52 zulassen, das heißt bis die Axialstifte 56 die Langlöcher vollständig durchlaufen haben. Dieses Bewegungsspiel des zweiten Kupplungsrings 52 in Umfangsrichtung ist abgestimmt auf Steuerbewegung über die Steuerzähne 134.

Während der Relatiwerdrehung zwischen dem zweiten Kupplungsring 52 und dem Steuerring 130 gleiten die Zähne des zweiten Kupplungsrings 52, wie vorstehend bereits im Hinblick auf die Ausführungsform gemäß Figuren Ziffer 9-15 analog beschrieben, mit ihren Komplementär-Steuerflanken 84 auf den Steuerflanken 152 der Steuerzähne 134 ab, was zu einer Axialbewegung des zweiten Kupplungsrings 52 entsprechend Pfeil P₂ führt. Dadurch werden die Zähne des zweiten Kupplungsrings 52 in drehmomentübertragenden Eingriff mit den Zähnen des ersten Kupplungsrings 40 gebracht, so dass die Übertragungsflanken 98 und 80 in drehmomentübertragenden Eingriff gelangen.

Bei Abschluss dieser axialen Bewegung des zweiten Kupplungsrings 52 entsprechend dem Pfeil P₂ befinden sich die Übertragungsflanken 80 und 98 von erstem Kupplungsring 40 und zweitem Kupplungsring 52 in maximal möglichem Eingriff, wobei die Gleitflanken 78 und 96 mit einem einander zugewandten Abschnitt in gegenseitiger Anlage stehen. Die beiden Kupplungsringe 40 und 52 sind maximal einander angenähert und stehen in maximalem gegenseitigem Eingriff.

Durch die Vielzahl der an der Drehmomentübertragung beteiligten Zähne ergibt sich eine gleichmäßige Kraftverteilung über den gesamten Umfang der beiden Kupplungsringe 40, 52. Der Drehmomentfluss bzw. der Kraftfluss läuft ausgehend von der Ritzelanordnung über die Trägerscheibe 58, die Axialstifte 56 auf den zweiten Kupplungsring 52, von diesem über die ineinander greifenden Verzahnungen, das heißt insbesondere über die Übertragungsflanken 80 und 98 zum ersten Kupplungsring 40 und von diesem unmittelbar in das Nabengehäuse 22 zum Antreiben des Hinterrads.

Sobald sich das Nabengehäuse 22 und damit der erste Kupplungsring 40 schneller dreht als der zweite Kupplungsring 52 mit der Ritzelanordnung, gelangen die Übertragungsflanken 80 und 98 außer Eingriff. Die Zähne 75, 94 gleiten mit ihren Gleitflanken 78 und 96 aneinander ab. Der zweite Kupplungsring 52 bewegt sich unter Vermittlung dieser Gleitbewegung wieder in axialer Richtung entgegen Pfeil P₂ in seine Ausgangsstellung zurück.

Die Ausführungsform gemäß Figur 16 ist insofern gegenüber der Ausführungsform gemäß Figuren 9 bis 15 abgewandelt, dass der Steuerring 130 auf der Seite der Trägerscheibe 58 und damit an der Ritzelanordnung 28 angebracht ist.

Sämtliche Ausführungsformen der Erfindung haben gegenüber dem Stand der Technik Vorteile hinsichtlich des Erfordernisses an Bauraum. Die Erfindung bietet eine Möglichkeit, eine wirksame Freilaufanordnung mit guten Drehmomentübertragungseigenschaften, geringer Geräuschentwicklung und hoher Lebensdauer bereitzustellen.

Ein wesentlicher Vorteil dieser Anordnung liegt beispielsweise auch darin, dass die beiden Kupplungsringe 40 und 52 derart ausgestaltet sein können, dass sie radial außerhalb der Lageranordnungen und in axialer Überlappung mit diesen angebracht werden können. Dadurch lässt sich in axialer Richtung erheblich Bauraum einsparen. Man erkennt dies insbesondere in den Figuren 1 bis 4, 9 und 16. Bei der Erfindung können die Kupplungsringe 40 und 52 einen erheblich größeren Innendurchmesser aufweisen, als der Außendurchmesser der Lageranordnung zur Lagerung des Nabengehäuses bzw. der Ritzelanordnung.

Durch die gestufte Ausbildung der Kupplungsringe lassen sich diese ebenfalls in ihrer axialen Ausdehnung kleiner gestalten, als beim Stand der Technik. Die Verwendung von Axialstiften optimiert den Kraftfluss und beseitigt zumindest an einem Kupplungsring das Erfordernis einer entsprechend stark zu dimensionierenden Außenverzahnung. Dadurch lassen sich auch für die Kupplungsringe Leichtbauwerkstoffe verwenden. Dies wird auch durch die Vielzahl der an der Drehmomentübertragung beteiligten Zähne möglich, dass die Flächenpressung an den einzelnen Zähnen reduziert.

Zur weiteren Gewichtseinsparung können die Axialstifte auch als Hohlstifte ausgebildet werden.

Durch die beschriebenen Steuermechanismen lassen sich die beiden Kupplungsringe einfach und zuverlässig in Eingriff bringen und voneinander trennen.

Weitere Vorteile der Erfindung sind die einfache Herstellung der hinterschnittenen Flächen bzw. Flanken der Verzahnungen aufgrund der Durchbrüche, eine geringe Geräuschentwicklung im Betrieb durch die Dämpfungselemente, die zu einer gedämpften Anlage der Teile führen, sowie eines schnellen Eingriffs bzw. einer schnellen Freigabe des Eingriffs bei Lastwechseln.

## Patentansprüche

1. Freilaufnabe (10) für ein Fahrrad umfassend:
- eine Nabenachse (A),
- ein Nabengehäuse (22), das über eine Lageranordnung (20, 30) drehbar auf der Nabenachse (A) gelagert ist,
- eine Ritzelanordnung (28), die drehbar auf der Nabenachse (A) gelagert ist,
- eine Freilaufkupplung (34), die zwischen dem Nabengehäuse (22) und der Ritzelanordnung (28) angeordnet ist und wahlweise eine Relativdrehung zwischen dem Nabengehäuse (22) und der Ritzelanordnung zulässt oder das Nabengehäuse (22) und die Ritzelanordnung (28) zur drehmomentübertragend koppelt,
wobei die Freilaufkupplung einen ersten Kupplungsring (40) aufweist, der drehmomentübertragend mit dem Nabengehäuse (22) gekoppelt oder koppelbar ist, und einen zweiten Kupplungsring (52) aufweist, der drehmomentübertragend mit der Ritzelanordnung (28) koppelbar oder gekoppelt ist, wobei die beiden Kupplungsringe (40,52) einander zugewandte Verzahnungen (72,90) aufweisen, mit denen sie wahlweise in gegenseitigen drehmomentübertragenden Eingriff oder außer Eingriff bringbar sind, wobei wenigstens einer der Kupplungsringe (40,52) relativ zu Nabenachse (A) axial verlagerbar ist,
**dadurch gekennzeichnet, dass** die beiden Kupplungsringe (40,52) in einem achsenthaltenden Schnitt betrachtet ein abgestuftes Wandstärkenprofil mit einem Abschnitt größerer Wandstärke und einem Abschnitt reduzierter Wandstärke aufweist, wobei die Verzahnung (72,90) in einem mittleren Radialbereich der Kupplungsringe (40,52) jeweils im Abschnitt größerer Wandstärke ausgebildet ist, wobei der Abschnitt reduzierter Wandstärke bei dem einen der beiden Kupplungsringe (40,52) radial innerhalb der Verzahnung (72,90) an diese anschließend ausgebildet ist und wobei der Abschnitt reduzierter Wandstärke bei dem anderen der beiden Kupplungsringe (40,52) radial außerhalb der Verzahnung (72,90) an diese anschließend ausgebildet ist.

2. Freilaufnabe (10) nach Anspruch 1,
**dadurch gekennzeichnet, dass** bei drehmomentübertragendem Eingriff zwischen erstem und zweitem Kupplungsring (40,52) die Abschnitte größerer Wandstärke in einem achsenthaltenden Schnitt betrachtet einander überlappen.

3. Freilaufnabe (10) nach dem Oberbegriff von Anspruch 1 oder einem der vorangehenden Ansprüche,
**dadurch gekennzeichnet, dass** wenigstens einer der Kupplungsringe (40,52) über eine Mitnahmeformation, vorzugsweise über eine Verzahnung (42) oder Axialstifte (56), zur Drehmomentübertragung mit dem Nabengehäuse (22) oder der Ritzelanordnung (28) gekoppelt ist.

4. Freilaufnabe (10) nach Anspruch 3,
**dadurch gekennzeichnet, dass** wenigstens einer der Kupplungsringe (40,52) mit einer Mehrzahl von axialen Durchbrüchen (54) versehen ist, in die zur Drehmomentübertragung Axialstifte (56) eingreifen.

5. Freilaufnabe (10) nach Anspruch 4,
**dadurch gekennzeichnet, dass** die Durchbrüche (54) im Wesentlichen auf einer Kreislinie angeordnet sind

6. Freilaufnabe (10) nach Anspruch 4 oder 5,
**dadurch gekennzeichnet, dass** die Axialstifte (56) an der Ritzelanordnung (28) fixiert sind, wobei der zweite Kupplungsring (52) die die Axialstifte (56) aufnehmenden Durchbrüche (54) aufweist.

7. Freilaufnabe (10) nach einem der Ansprüche 4 bis 6,
**dadurch gekennzeichnet, dass** die Axialstifte (56) an dem Nabengehäuse (22) fixiert sind, wobei der erste Kupplungsring (40) die die Axiaistifte (56) aufnehmenden Durchbrüche (54) aufweist.

8. Freilaufnabe (10) nach Anspruch 3,
**dadurch gekennzeichnet, dass** der wenigstens eine der Kupplungsringe (40,52) mit einer Mehrzahl von Axialstiften (56) versehen ist, mit denen er axial in Ausnehmungen der Ritzelanordnung (28) oder dem Nabengehäuse (22) geführt ist.

9. Freilaufnabe (10) nach einem der vorangehenden Ansprüche,
**dadurch gekennzeichnet, dass** wenigstens einer der Kupplungsringe (40,52) mit einer Außenverzahnung (42) zur Drehmomentübertragung mit dem Nabengehäuse (22) oder der Ritzelanordnung (28) ausgebildet ist.

10. Freilaufnabe (10) nach einem der vorangehenden Ansprüche,
**dadurch gekennzeichnet, dass** der zweite Kupplungsring (52) mit einer axialen Vorspannkraft auf den ersten Kupplungsring (40) hin gespannt ist.

11. Freilaufnabe (10) nach einem der vorangehenden Ansprüche,
**dadurch gekennzeichnet, dass** der erste Kupplungsring (40) mit einer axialen Vorspannkraft auf den zweiten Kupplungsring (52) hin gespannt ist.

12. Freilaufnabe (10) nach Anspruch 10 oder 11,
**dadurch gekennzeichnet, dass** die auf den jeweiligen Kupplungsring (40,52) wirkende axiale Vorspannkraft durch eine Feder oder magnetisch erreicht wird.

13. Freilaufnabe (10) nach Anspruch 12,
**dadurch gekennzeichnet, dass** an dem ersten oder/und zweiten Kupplungsring (40,52) eine Mehrzahl von Magneten (64) angeordnet ist, wobei jedem Magneten (64) eine Komplementärmagnet (62) an der Ritzelanordnung oder dem Nabengehäuse (22) zugeordnet ist, wobei jedes Paar aus Magnet (64) und Komplementärmagnet (62) die axiale Vorspannkraft auf den jeweiligen Kupplungsring (52) ausübt.

14. Freilaufnabe (10) nach dem Oberbegriff von Anspruch 1 oder einem der vorangehenden Ansprüche,
**dadurch gekennzeichnet, dass** der erste Kupplungsring (40) und der zweite Kupplungsring (52) an ihren einander zugewandten Flächen mit zueinander komplementären Sägezahn-Verzahnungen (72,90) ausgebildet sind, wobei jeder Sägezahn (75,92 der Verzahnung (72,90) eine Übertragungsflanke (80,98) und eine Gleitflanke (78,96) aufweist, wobei bei einer Drehmomentübertragung zwischen erstem und zweitem Kupplungsring (40,52) eine Mehrzahl von Übertragungsflanken (80) des ersten Kupplungsrings (40) mit einer Mehrzahl von Übertragungsflanken (98) des zweiten Kupplungsrings (52) in Eingriff stehen, und wobei in einer drehmomentübertragungsfreien Freilaufsituation die Gleitflanken (78) des ersten Kupplungsrings (40) an den Gleitflanken (96) des zweiten Kupplungsrings (52) abgleiten oder die beiden Kupplungsringe (40,52) kontaktfrei sind.

15. Freilaufnabe (10) nach Anspruch 14,
**dadurch gekennzeichnet, dass** im Bereich der Verzahnungen (72,90) in wenigstens einem der Kupplungsringe (40,52) Ausnehmungen oder Durchbrüche (82,100) vorgesehen sind, wobei wenigstens eine Fläche der Ausnehmungen oder Durchbrüche (82,100) zumindest abschnittsweise die Übertragungsflanke (80,98) bildet.

16. Freilaufnabe (10) nach Anspruch 15,
**dadurch gekennzeichnet, dass** die Übertragungsflanke (80,98) in axialer Richtung betrachtet einen Hinterschnitt aufweist.

17. Freilaufnabe (10) nach einem der Ansprüche 14 bis 16,
**dadurch gekennzeichnet, dass** in axialer Richtung betrachtet bei erstem und zweitem Kupplungsring (40,52) die Ausdehnung der Gleitflanke (78,96) in Umfangsrichtung größer bemessen ist als die Breite einer benachbarten Ausnehmung oder eines benachbarten Durchbruchs (82,100).

18. Freilaufnabe (10) nach einem der vorangehenden Ansprüche,
**dadurch gekennzeichnet, dass** für wenigstens einen der Kupplungsringe (40, 52) ein Axialanschlag in Richtung des jeweils anderen Kupplungsringes (52, 40) vorgesehen ist, der die axiale Bewegung des Kupplungsrings (40, 52) begrenzt.

19. Freilaufnabe (10) nach einem der vorangehenden Ansprüche,
**dadurch gekennzeichnet, dass** das Nabengehäuse (22) mit einem Dämpfungselement für eine gedämpfte Anlage des ersten Kupplungsrings versehen ist.

20. Freilaufnabe (10) nach einem der vorangehenden Ansprüche,
**dadurch gekennzeichnet, dass** einem der beiden Kupplungsringe (40,52) ein Steuerring (130) zugeordnet ist, der mit dem Nabengehäuse (22) oder der Ritzelanordnung (28) drehfest gekoppelt ist, wobei der Steuerring (130) eine Steuerverzahnung (134) aufweist, die mit einer Komplementärsteuerverzahnung (84) des zugeordneten Kupplungsrings (40,52) in Eingriff steht, wobei der zugeordnete Kupplungsring (40,52) unter Einwirkung einer Steuerkraft mit seiner Komplementärsteuerverzahnung an der Steuerverzahnung abgeleitet, so dass sich eine axiale Bewegung des Kupplungsrings (40,52) einstellt.

21. Freilaufnabe (10) nach Anspruch 20,
**dadurch gekennzeichnet, dass** die Steuerkraft über eine Reibkopplung des zugeordneten Kupplungsrings mit einer relativ zu dem Steuerring drehenden Komponente der Freilaufnabe (10) erzeugt wird.

22. Freilaufnabe (10) nach Anspruch 20 oder 21,
**dadurch gekennzeichnet, dass** die Komponente eine den Freilauf gegenüber der Umgebung abdichtenden Dichtung (136) umfasst.

## Claims

1. Freewheeling hub (10) for a bicycle comprising:
- a hub axis (A),
- a hub housing (22) which is mounted rotatably on the hub axis (A) via a bearing arrangement (20, 30),
- a sprocket arrangement (28) which is mounted rotatably on the hub axis (A),
- a freewheeling clutch (34) which is arranged between the hub housing (22) and the sprocket arrangement (28), and selectively allows a relative rotation between the hub housing (22) and the sprocket arrangement or couples the hub housing (22) and the sprocket arrangement (28) in a torque-transmitting manner,
the freewheeling clutch having a first clutch ring (40) which is coupled or can be coupled in a torque-transmitting manner to the hub housing (22), and having a second clutch ring (52) which can be coupled or is coupled in a torque-transmitting manner to the sprocket arrangement (28), the two clutch rings (40, 52) having toothing systems (72, 90) which face one another and by way of which they can be selectively brought into mutual torque-transmitting engagement or out of engagement, it being possible for at least one of the clutch rings (40, 52) to be moved axially relative to the hub axis (A), **characterized in that**, as viewed in a section which includes the axis, the two clutch rings (40, 52) have a stepped wall thickness profile with a section with a greater wall thickness and a section with a reduced wall thickness, the toothing system (72, 90) in a central radial region of the clutch rings (40, 52) being configured in each case in the section with a greater wall thickness, the section with a reduced wall thickness being configured radially inside the toothing system (72, 90) so as to adjoin the latter in the case of the one of the two clutch rings (40, 52), and the section with a reduced wall thickness being configured radially outside the toothing system (72, 90) so as to adjoin the latter in the case of the other one of the two clutch rings (40, 52) .

2. Freewheeling hub (10) according to Claim 1, **characterized in that**, in the case of a torque-transmitting engagement between the first and the second clutch ring (40, 52), the sections with a greater wall thickness overlap one another as viewed in a section which includes the axis.

3. Freewheeling hub (10) according to the precharacterizing clause of Claim 1 or either of the preceding claims, **characterized in that** at least one of the clutch rings (40, 52) is coupled to the hub housing (22) or the sprocket arrangement (28) for the transmission of torque via a driving formation, preferably via a toothing system (42) or axial pins (56).

4. Freewheeling hub (10) according to Claim 3, **characterized in that** at least one of the clutch rings (40, 52) is provided with a plurality of axial apertures (54), into which the axial pins (56) engage for the transmission.of torque.

5. Freewheeling hub (10) according to Claim 4, **characterized in that** the apertures (54) are arranged substantially on a circle.

6. Freewheeling hub (10) according to Claim 4 or 5, **characterized in that** the axial pins (56) are fixed on the sprocket arrangement (28), the second clutch ring (52) having the apertures (54) which receive the axial pins (56).

7. Freewheeling hub (10) according to one of Claims 4 to 6, **characterized in that** the axial pins (56) are fixed on the hub housing (22), the first clutch ring (40) having the apertures (54) which receive the axial pins (56).

8. Freewheeling hub (10) according to Claim 3, **characterized in that** the at least one of the clutch rings (40, 52) is provided with a plurality of axial pins (56), by way of which it is guided axially in recesses of the sprocket arrangement (28) or the hub housing (22).

9. Freewheeling hub (10) according to one of the preceding claims, **characterized in that** at least one of the clutch rings (40, 52) is configured with an external toothing system (42) for the transmission of torque to the hub housing (22) or the sprocket arrangement (28).

10. Freewheeling hub (10) according to one of the preceding claims, **characterized in that** the second clutch ring (52) is stressed towards the first clutch ring (40) by way of an.axial prestressing force.

11. Freewheeling hub (10) according to one of the preceding claims, **characterized in that** the first clutch ring (40) is stressed towards the second clutch ring (52) by way of an axial prestressing force.

12. Freewheeling hub (10) according to Claim 10 or 11, **characterized in that** the axial prestressing force which acts on the respective clutch ring (40, 52) is achieved magnetically or by way of a spring.

13. Freewheeling hub (10) according to Claim 12, **characterized in that** a plurality of magnets (64) are arranged on the first and/or second clutch ring (40, 52), each magnet (64) being assigned a complementary magnet (62) on the sprocket arrangement or the hub housing (22), each pair comprising a magnet (64) and a complementary magnet (62) exerting the axial prestressing force on the respective clutch ring (52).

14. Freewheeling hub (10) according to the precharacterizing clause of Claim 1 or one of the preceding claims, **characterized in that**, on their faces which face one another, the first clutch ring (40) and the second clutch ring (52) are configured with saw tooth toothing systems (72, 90) which are complementary with respect to one another, each saw tooth (75, 92) of the toothing system (72, 90) having a transmission flank (80, 98) and a sliding flank (78, 96), a plurality of transmission flanks (80) of the first clutch ring (40) being in engagement with a plurality of transmission flanks (98) of the second clutch ring (52) in the case of a transmission of torque between the first and the second clutch ring (40, 52), and the sliding flanks (78) of the first clutch ring (40) sliding on the sliding flanks (96) of the second clutch ring (52) or the two clutch rings (40, 52) not being in contact in the freewheeling situation which does not transmit torque.

15. Freewheeling hub (10) according to Claim 14, **characterized in that** recesses or apertures (82, 100) are provided in the region of the toothing systems (72, 90) in at least one of the clutch rings (40, 52), at least one surface of the recesses or apertures (82, 100) forming the transmission flank (80, 98) at least in sections.

16. Freewheeling hub (10) according to Claim 15, **characterized in that** the transmission flank (80, 98) has an undercut as viewed in the axial direction.

17. Freewheeling hub (10) according to one of Claims 14 to 16, **characterized in that**, as viewed in the axial direction in the case of the first and the second clutch ring (40, 52), the extent of the sliding flank (78, 96) in the circumferential direction is greater in dimension than the width of an adjoining recess or an adjoining aperture (82, 100).

18. Freewheeling hub (10) according to one of the preceding claims, **characterized in that** an axial stop is provided for at least one of the clutch rings (40, 52) in the direction of the respective other clutch ring (52, 40), which axial stop limits the axial movement of the clutch ring (40, 52).

19. Freewheeling hub (10) according to one of the preceding claims, **characterized in that** the hub housing (22) is provided with a damping element for damped contact of the first clutch ring.

20. Freewheeling hub (10) according to one of the preceding claims, **characterized in that** one of the two clutch rings (40, 52) is assigned a control ring (130) which is coupled fixedly to the hub housing (22) or the sprocket arrangement (28) so as to rotate with it, the control ring (130) having a control toothing system (134) which is in engagement with a complementary control toothing system (84) of the associated clutch ring (40, 52), the associated clutch ring (40, 52) sliding with its complementary control toothing system on the control toothing system under the action of a control force, with the result that an axial movement of the clutch ring (40, 52) is set.

21. Freewheeling hub (10) according to Claim 20, **characterized in that** the control force is generated via a frictional coupling of the associated clutch ring to a component of the freewheeling hub (10), which component rotates relative to the control ring.

22. Freewheeling hub (10) according to Claim 20 or 21, **characterized in that** the component comprises a seal (136) which seals the freewheel with respect to the surroundings.

## Revendications

1. Moyeu à roue libre (10) destiné à une bicyclette, ledit moyeu comprenant :
- un axe de moyeu (A),
- un boîtier de moyeu (22) qui est monté à rotation sur l'axe de moyeu (A) par le biais d'un ensemble de paliers (20, 30),
- un ensemble de pignons (28) qui est monté à rotation sur l'axe de moyeu (A),
- un accouplement à roue libre (34) qui est disposé entre le boîtier de moyeu (22) et l'ensemble de pignons (28), et qui permet de manière sélective une rotation relative entre le boîtier de moyeu (22) et l'ensemble de pignons ou qui accouple le boîtier de moyeu (22) et l'ensemble de pignons (28) pour transmettre le couple,
l'accouplement à roue libre comportant une première bague d'accouplement (40), qui est accouplée ou peut être couplée au boîtier de moyeu (22) pour transmettre un couple, et une deuxième bague d'accouplement (52) qui est accouplée ou peut être accouplée à l'ensemble de pignons (28) pour transmettre un couple, les deux bagues d'accouplement (40, 52) comportant des dentures (72, 90), tournées l'une vers l'autre, qui peuvent sélectivement être engrenées l'une à l'autre avec transmission de couple ou désengrenées l'une de l'autre, l'une au moins des bagues d'accouplement (40, 52) pouvant être déplacée axialement par rapport à l'axe de moyeu (A),
**caractérisé en ce que** les deux bagues d'accouplement (40, 52) comportant, dans une vue en coupe contenant l'axe, un profil d'épaisseur de paroi étagé pourvue d'une partie de plus grande épaisseur de paroi et une partie d'épaisseur de paroi réduite, la denture (72, 90) étant formée dans une région radiale moyenne des bagues d'accouplement (40, 52), à chaque fois dans la partie de plus grande épaisseur de paroi, la partie d'épaisseur de paroi réduite étant formée pour l'une des deux bagues d'accouplement (40, 52), radialement vers l'intérieur de la denture (72, 90) de manière adjacente à celle-ci et la partie d'épaisseur de paroi réduite étant formée, pour l'autre des deux bagues d'accouplement (40, 52), radialement à l'extérieur de la denture (72, 90) de manière adjacente à celle-ci.

2. Moyeu à roue libre (10) selon la revendication 1, **caractérisé en ce que**, lors de l'engrènement à transmission de couple des première et deuxième bagues d'accouplement (40, 52), les parties de plus grande épaisseur de paroi se chevauchent dans une vue en coupe contenant l'axe.

3. Moyeu à roue libre (10) selon le préambule de la revendication 1 ou l'une des revendications précédentes,
**caractérisé en ce que** l'une au moins des bagues d'accouplement (40, 52) est accouplée au boîtier de moyeu (22) ou à l'ensemble de pignons (28) pour la transmission de couple par le biais d'une formation d'entraînement, de préférence d'une denture (42) ou de tiges axiales (56).

4. Moyeu à roue libre (10) selon la revendication 3, **caractérisé en ce que** l'une au moins des bagues d'accouplement (40, 52) est munie d'une pluralité de passage axiaux (54) dans lesquels des tiges axiales (56) s'engagent pour la transmission de couple.

5. Moyeu à roue libre (10) selon la revendication 4, **caractérisé en ce que** les passages (54) sont ménagés sensiblement sur une ligne circulaire.

6. Moyeu à roue libre (10) selon la revendication 4 ou 5,
**caractérisé en ce que** les tiges axiales (56) sont fixées à l'ensemble de pignons (28), la deuxième bague d'accouplement (52) comportant les passages (54) recevant des tiges axiales (56).

7. Moyeu à roue libre (10) selon l'une des revendications 4 à 6,
**caractérisé en ce que** les tiges axiales (56) sont fixées sur le boîtier de moyeu (22), la première bague d'accouplement (40) comportant les passages (54) recevant les tiges axiales (56).

8. Moyeu à roue libre (10) selon la revendication 3, **caractérisé en ce que** l'au moins une des bagues d'accouplement (40, 52) est munie d'une pluralité de tiges axiales (56) avec lesquelles elle est guidée axialement dans des évidements de l'ensemble de pignons (28) ou du boîtier de moyeu (22).

9. Moyeu à roue libre (10) selon l'une des revendications précédentes,
**caractérisé en ce que** l'une au moins des bagues d'accouplement (40, 52) est conçue avec une denture extérieure (42) pour la transmission de couple au boîtier de moyeu (22) ou à l'ensemble de pignons (28).

10. Moyeu de roue libre (10) selon l'une des revendications précédentes,
**caractérisé en ce que** la deuxième bague d'accouplement (52) est contrainte en direction de la première bague d'accouplement (40) avec une force de précontrainte axiale.

11. Moyeu de roue libre (10) selon l'une des revendications précédentes, **caractérisé en ce que** la première bague d'accouplement (40) est contrainte en direction de la deuxième bague d'accouplement (52) avec une force de précontrainte axiale.

12. Moyeu à roue libre (10) selon la revendication 10 ou 11,
**caractérisé en ce que** la force de précontrainte axiale agissant sur la bague d'accouplement (40, 52) respective est obtenue par le biais d'un ressort ou magnétiquement.

13. Moyeu à roue libre (10) selon la revendication 12, **caractérisé en ce qu'**une pluralité d'aimants (64) sont disposés sur la première et/ou la deuxième bague d'accouplement (40, 52), chaque aimant (64) étant associé à un aimant complémentaire (62) au niveau de l'ensemble de pignons ou du boîtier de moyeu (22), chaque paire d'aimant (64) et d'aimant complémentaire (62) exerçant la force de précontrainte axiale sur la bague d'accouplement respective (52).

14. Moyeu à roue libre (10) selon le préambule de la revendication 1 ou l'une des revendications précédentes,
**caractérisé en ce que** la première bague d'accouplement (40) et la deuxième bague d'accouplement (52) sont conçues, sur leurs surfaces mutuellement opposées, avec des dentures (72, 90) en dents de scie complémentaires les unes des autres, chaque dent de scie (75, 92) de la denture (72, 90) comportant un flanc de transmission (80, 98) et un flanc de glissement (78, 96), une pluralité de flancs de transmission (80) de la première bague d'accouplement (40) s'engageant avec une pluralité de flancs de transmission (98) de la deuxième bague d'accouplement (52) lors d'une transmission de couple entre la première et la deuxième bague d'accouplement (40, 52), et les flancs de glissement (78) de la première bague d'accouplement (40) glissant sur les flancs de glissement (96) de la deuxième bague d'accouplement (52), ou les deux bagues d'accouplement (40, 52) étant sans contact, dans une situation de roue libre sans transmission de couple.

15. Moyeu à roue libre (10) selon la revendication 14, **caractérisé en ce que** des évidements ou des passages (82, 100) sont ménagés dans au moins une des bagues d'accouplement (40, 52) dans la région des dents (72, 90), au moins une surface des évidements ou des passages (82, 100) formant au moins partiellement le flanc de transmission (80, 98).

16. Moyeu à roue libre (10) selon la revendication 15, **caractérisé en ce que** le flanc de transmission (80, 98) comporte une dépouille lorsque l'on regarde dans la direction axiale.

17. Moyeu à roue libre (10) selon l'une des revendications 14 à 16,
**caractérisé en ce que**, lorsque l'on regarde dans la direction axiale, pour les première et deuxième bagues d'accouplement (40, 52), l'étendue du flanc de glissement (78, 96) dans la direction circonférentielle est plus grande que la largeur d'un évidement adjacent ou d'un passage adjacent (82, 100).

18. Moyeu à roue libre (10) selon l'une des revendications précédentes,
**caractérisé en ce qu'**il est prévu, pour l'une au moins des bagues d'accouplement (40, 52), une butée axiale en direction de l'autre bague d'accouplement (52, 40), laquelle butée axiale limite le mouvement axial de la bague d'accouplement (40, 52).

19. Moyeu à roue libre (10) selon l'une des revendications précédentes,
**caractérisé en ce que** le boîtier de moyeu (22) est muni d'un élément amortisseur destiné à un appui amorti de la première bague d'accouplement.

20. Moyeu à roue libre (10) selon l'une des revendications précédentes,
**caractérisé en ce qu'**une bague de commande (130) est associée à l'une des deux bagues d'accouplement (40, 52), laquelle bague de commande est accouplée solidairement en rotation au boîtier de moyeu (22) ou à l'ensemble de pignons (28), la bague de commande (130) comportant une denture de commande (134) qui s'engrène avec une denture de commande complémentaire (84) de la bague d'accouplement associée (40, 52), la bague d'accouplement associée (40, 52) glissant, sous l'action d'une force de commande exercée avec sa denture de commande complémentaire, sur la denture de commande de manière à régler un mouvement axial de la bague d'accouplement (40, 52).

21. Moyeu à roue libre (10) selon la revendication 20, **caractérisé en ce que** la force de commande est générée par accouplement à friction de la bague d'accouplement associée avec un composant, tournant par rapport à la bague de commande, du moyeu à roue libre (10).

22. Moyeu à roue libre (10) selon la revendication 20 ou 21,
**caractérisé en ce que** le composant comprend un joint d'étanchéité (136) réalisant l'étanchéité de la roue libre par rapport à l'environnement.
